(19)

Europäisches
Patentamt
European
Patent Office
Office européen
des brevets

(11) **EP 4 626 055 A1**

(12) **EUROPEAN PATENT APPLICATION**
published in accordance with Art. 153(4) EPC

(43) Date of publication:
**01.10.2025 Bulletin 2025/40**

(21) Application number: **23894780.8**

(22) Date of filing: **14.11.2023**

(51) International Patent Classification (IPC):
*H04W 16/28* (2009.01)　　*H04W 48/10* (2009.01)
*H04W 72/04* (2023.01)　　*H04W 74/08* (2024.01)
*H04B 7/185* (2006.01)　　*H04L 27/26* (2006.01)
*H04W 84/06* (2009.01)

(52) Cooperative Patent Classification (CPC):
**H04W 16/28; H04B 7/185; H04L 27/26;**
**H04W 48/10; H04W 64/006; H04W 72/04;**
**H04W 74/08;** H04W 84/06

(86) International application number:
**PCT/KR2023/014557**

(87) International publication number:
**WO 2024/111849 (30.05.2024 Gazette 2024/22)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority:　25.11.2022　KR 20220160442
　　　　　　　26.05.2023　KR 20230068270

(71) Applicant: **Ajou University Industry-Academic**
**Cooperation**
**Foundation**
**Suwon-si, Gyeonggi-do 16499 (KR)**

(72) Inventors:
• **KIM, Jae Hyun**
**Seoul 06602 (KR)**
• **SHIN, Won Jae**
**Seoul 06217 (KR)**
• **HAN, Sang Min**
**Suwon-si, Gyeonggi-do 16697 (KR)**

(74) Representative: **Zacco Denmark A/S**
**Arne Jacobsens Allé 15**
**2300 Copenhagen S (DK)**

(54) **DEVICE AND METHOD FOR PERFORMING BEAM SELECTION IN COMMUNICATION SYSTEM SUPPORTING SATELLITE COMMUNICATION**

(57)　A method of performing beam selection of a terminal in a communication system supporting satellite communication, the method comprising: receiving first information about an elevation angle for supporting the satellite communication and second information about a center of a beam, determining coverage of the beam based on the first information and the second information, determining a distance between the terminal and the center of the beam based on the second information and selecting a serving beam for the terminal based on the coverage of the beam and the distance.

FIG. 18

EP 4 626 055 A1

## Description

### Technical Field

The present disclosure relates to a communication system, and more particularly, to a device and method for beam design and beam selection in a communication system supporting satellite communication.

### Background Art

Mobile communication systems are gradually evolving with each generation. Following the successful commercialization of the LTE (long term evolution) system, the standardization and commercialization of the 5G (5th generation) system are in progress, and discussions on the 6G (6th generation) system are also actively taking place. Low Earth Orbit (LEO) satellite networks are suitable for 5G NR (New Radio) and next-generation communication systems because they have shorter delay times than high-orbit satellites.

### Disclosure

### Technical Problem

The present disclosure provides a device and method for selecting a beam in a communication system supporting satellite communication.

The present disclosure provides a device and method for selecting a serving beam among beams provided by a satellite in a communication system supporting satellite communication.

The present disclosure provides a device and method for selecting a beam in consideration of an effective coverage size in a communication system supporting satellite communication.

The present disclosure provides a device and method for determining an effective coverage size of a beam in a communication system supporting satellite communication.

The present disclosure provides a device and method for obtaining information necessary for determining an effective coverage size of a beam in a communication system supporting satellite communication.

### Technical Solution

According to the present disclosure, a method of performing beam selection of a terminal in a communication system supporting satellite communication is provided.

The technical problems solved by the present disclosure are not limited to the above technical problems and other technical problems which are not described herein will be clearly understood by a person (hereinafter referred to as an ordinary technician) having ordinary skill in the technical field, to which the present disclosure belongs, from the following description.

According to the present disclosure, the method may comprise, receiving first information about an elevation angle for supporting the satellite communication and second information about a center of a beam, determining coverage of the beam based on the first information and the second information, determining a distance between the terminal and the center of the beam based on the second information and selecting a serving beam for the terminal based on the coverage of the beam and the distance.

The method, wherein the first information and the second information may be received through system information, and wherein the system information further includes at least one of a carrier frequency, a subcarrier spacing, a minimal elevation angle, a maximum elevation angle, preamble information, an altitude of the satellite or a center location of the beam to support satellite communication for the terminal.

The method, wherein the second information may include information about the center location of a beam transmitted by the satellite, wherein the first information has different values depending on movement of the satellite, and wherein the serving beam is determined by considering coverage of a beam having different sizes depending on the elevation angle.

The method, wherein each of the carrier frequency and the subcarrier spacing may varies according to a frequency range (FR) set for the terminal, wherein the subcarrier spacing supported in FR1 is 15, 30 or 60 kHz, wherein the subcarrier spacing supported in FR2 is 60 kHz or 120 kHz, and wherein the serving beam is determined by considering coverage of a beam having different sizes depending on the frequency range set for the terminal.

The method, wherein the coverage of the beam may varies depending on the subcarrier spacing set for the terminal, a frequency range and an elevation angle due to movement of the satellite, wherein the coverage of the beam changes to 1/2 as the subcarrier spacing increases from N to 2N, wherein the coverage of the beam changes to 1/5 size as the frequency range increases from M to 2M, and wherein the serving beam is selected by considering an elevation angle due to movement of the satellite.

The method wherein the coverage of the beam may be determined based on variation characteristics of a residual Doppler value remaining after compensation based on the center of the beam, according to a distance from the center of the beam.

The method wherein the determining a size of the coverage of the beam may comprise: determining a maximum residual Doppler value based on an orbit or altitude of the satellite and a carrier frequency of a signal transmitted through the beam and determining the size of the coverage based on the maximum residual Doppler value and the subcarrier spacing of the signal.

The method may further comprise checking a parameter indicating the subcarrier spacing included in a master information block (MIB) transmitted by the satellite and checking the subcarrier spacing based on the parameter.

The method, wherein the checking the subcarrier spacing may comprise interpreting the parameter based on a frequency range (FR) to which a frequency at which the parameter indicating the subcarrier spacing is received belongs.

The method, may further comprise checking a parameter indicating the carrier frequency included in system information related to the satellite.

The method, may further comprise estimating a location of the center of the beam or a distance between the terminal and the center of the beam based on information obtained through system information.

The method, may further comprise checking information about a location of the center of the beam included in a system information block (SIB) including assistance information for NTN connection.

The method, wherein the selecting the serving beam may comprise selecting a beam that forwarded the first information and the second information as the serving beam, when the distance is less than or equal to a size of the coverage.

The method, wherein the determining the coverage of the beam may comprise: determining a first beam size considering differential delay based on a first information set obtained based on system information, determining a second beam size considering compensation for Doppler shift based on a second information set obtained based on the system information and

determining a size of the coverage of the beam used by the satellite based on the smaller beam size between the first beam size and the second beam size.

The method, wherein the first information set may include at least one of a minimum elevation angle, preamble information, a subcarrier spacing or an altitude of the satellite, and wherein the second information set includes at least one of a carrier frequency of a signal transmitted through the beam, the subcarrier spacing, a maximum elevation angle or the altitude of the satellite.

The method, wherein the differential delay may be limited based on at least one of a maximum random access distance or a maximum timing advance distance.

The method, wherein the first beam size may be determined based on a maximum random access distance calculated using random access preamble information.

The method, wherein the first information set may include a minimum elevation angle, and wherein the minimum elevation angle may include a predefined value.

The method, wherein the second information set may include a maximum elevation angle, and wherein the maximum elevation angle may be included in an SIB including assistance information for NTN connection.

According to another present disclosure a terminal in a wireless communication system is provided. The terminal may comprise: a transceiver and at least one processor connected to the transceiver, wherein the at least one processor is configured to: receive first information about an elevation angle for supporting the satellite communication and second information about a center of a beam, determine coverage of a beam based on the first information and the second information,

determine a distance between the terminal and the center of the beam based on the second information and select a serving beam for the terminal based on the coverage of the beam and the distance.

**Advantageous Effects**

In a non-terrestrial communication (NTN) system using a satellite, a beam can be effectively selected.

More specifically, in a communication system supporting satellite communication, by selecting a serving cell and a serving beam in consideration of an effective beam and beam size based on information about a reference location of a cell, an optimal serving cell and serving beam considering the characteristics of the conventional non-terrestrial radio access environment, such as long delay time, variable delay time, and large Doppler effect due to satellite movement, are selected.

This applies the protocol and communication procedures of a wireless communication system without any additional procedures, and also provides the advantage of providing continuous service support by selecting an optimal cell and beam by considering differences in access environments by satellite type, wide beam coverage, large delay differences by terminal location, moving cell location situations, and whether terminal location information is used.

**Description of Drawings**

FIG. 1 illustrates an example of a system supporting satellite communication according to an embodiment of the present disclosure.

FIG. 2 illustrates another example of a system supporting satellite communication according to an embodiment of the present disclosure.

FIG. 3 illustrates a configuration of a device in a system supporting satellite communication according to an embodiment of the present disclosure.

FIG. 4a and FIG. 4b illustrate fixed beam cells and moving beam cells provided by a satellite in a system supporting satellite communication according to an embodiment of the present disclosure.

FIG. 5 illustrates simulation results for Doppler shift that may occur for each carrier frequency in a communication system supporting satellite communication according to an embodiment of the present disclosure.

FIG. 6 illustrates a concept of pre-compensation for Doppler shift in a communication system supporting satellite communication according to an embodiment of the present disclosure.

FIGS. 7a to 7d illustrate variations in residual Doppler shift according to a distance from a beam center in a communication system supporting satellite communication according to an embodiment of the present disclosure.

FIG. 8 illustrates variations in BER (bit error rate) according to a distance from a beam center in a communication system supporting satellite communication according to an embodiment of the present disclosure.

FIG. 9 illustrates differences in residual Doppler shift according to locations within coverage in a communication system supporting satellite communication according to an embodiment of the present disclosure.

FIG. 10 illustrates a comparison of patterns of Doppler shift at a beam center and a beam boundary in a communication system supporting satellite communication according to an embodiment of the present disclosure.

FIG. 11 illustrates residual Doppler shift of a satellite according to carrier frequency that occur at a beam edge located in a direction perpendicular to a moving direction of the satellite in a communication system supporting satellite communication according to an embodiment of the present disclosure.

FIG. 12 illustrates maximum residual Doppler shift according to a distance from a beam center in a communication system supporting satellite communication according to an embodiment of the present disclosure.

FIG. 13 illustrates a major semi-axis of effective beam coverage according to carrier frequency and SCS in a communication system supporting satellite communication according to an embodiment of the present disclosure.

FIG. 14 illustrates a change in elevation angle according to movement of a satellite in a communication system supporting satellite communication according to an embodiment of the present disclosure.

FIG. 15 illustrates a change in Doppler shift according to a distance from a beam center to a beam edge according to movement of a satellite in a communication system supporting satellite communication according to an embodiment of the present disclosure.

FIG. 16 illustrates a change in residual Doppler shift according to a distance from a beam center to a beam edge according to movement of a satellite in a communication system supporting satellite communication according to an embodiment of the present disclosure.

FIG. 17 illustrates an initial access procedure in a communication system supporting satellite communication according to an embodiment of the present disclosure.

FIG. 18 illustrates an example of a procedure for selecting a beam according to an embodiment of the present disclosure.

FIG. 19 illustrates an example of a procedure for obtaining information for beam selection according to an embodiment of the present disclosure.

FIG. 20 illustrates an example of a procedure for obtaining subcarrier spacing information according to an embodiment of the present disclosure.

FIG. 21 illustrates an example of a procedure for obtaining beam center location information according to an embodiment of the present disclosure.

FIGS. 22a to 22c illustrate simulation results for a major semi-axis of beam coverage according to satellite altitude in a communication system supporting satellite communication according to an embodiment of the present disclosure.

FIG. 23a illustrates a concept of differential delay in a communication system supporting satellite communication according to an embodiment of the present disclosure.

FIG. 23b illustrates a format of a random access preamble in a communication system supporting satellite communication according to an embodiment of the present disclosure.

FIG. 24a and FIG. 24b illustrate maximum random access distances for each preamble format in a communication system supporting satellite communication according to an embodiment of the present disclosure.

FIG. 25 illustrates uplink and downlink timing relationships in a communication system supporting satellite communication according to an embodiment of the present disclosure.

FIG. 26 illustrates a beam radius of a satellite in a communication system supporting satellite communication according to an embodiment of the present disclosure.

FIG. 27a and FIG. 27b illustrate simulation results for beam size according to satellite altitude in a communication system supporting satellite communication according to an embodiment of the present disclosure.

FIG. 28a and FIG. 28b illustrate simulation results for beam size according to satellite altitude in a communication system supporting satellite communication according to an embodiment of the present disclosure.

FIG. 29 is a conceptual diagram for determining a final beam size upper bound in a communication system supporting satellite communication according to an embodiment of the present disclosure.

FIGS. 30a to 30d illustrate simulation results for a major semi-axis of beam coverage according to satellite altitude in a communication system supporting satellite communication according to an embodiment of the present disclosure.

FIG. 31 illustrates an example of a procedure for selecting a beam according to an embodiment of the present disclosure.

FIG. 32 illustrates an example of a procedure for obtaining a minimum elevation angle according to an embodiment of the present disclosure.

FIG. 33 illustrates an example of a procedure for obtaining a maximum elevation angle according to an embodiment of the present disclosure.

**Mode for Invention**

The terms used in the present embodiments are selected from the widely used general terms possible while considering the functions in the present embodiments, but this may vary depending on the intention of engineers in the field, precedents, the emergence of new technologies, etc. In addition, in certain cases, there are terms arbitrarily selected by the applicant, and in this case, the meanings thereof will be described in detail in the relevant parts. Therefore, the terms used in the present embodiments should be defined based on the meanings of the terms and the contents of the present embodiments, rather than simply the names of the terms.

The present embodiments may have various changes and may have various forms, and some embodiments will be illustrated in the drawings and described in detail. However, this is not intended to limit the present embodiments to a specific disclosure form, but should be understood to include all modifications, equivalents, or substitutes included in the spirit and technical scope of the present embodiments. The terms used in this specification are only used to describe the embodiments, and are not intended to limit the present embodiments.

The terms used in the present embodiments, unless otherwise defined, have the same meaning as commonly understood by a person of ordinary skill in the art to which the present embodiments belong. Terms defined in commonly used dictionaries should be interpreted as having a meaning consistent with the meaning they have in the context of the relevant art, and should not be interpreted in an idealized or overly formal sense unless explicitly defined in the present embodiments.

One of the major issues of low earth orbit (LEO) satellite networks is the high mobility of LEO satellites. Doppler shift due to high mobility should be considered in the design of LEO satellite networks. Several studies have been proposed to overcome the Doppler shift in LEO satellite networks, but research on NR-based NTN (Non-Terrestrial Network) is still insufficient. Therefore, the present disclosure proposes a cell management technology of LEO satellite networks to analyze the characteristics of Doppler shift in LEO satellite networks when applying a compensation scenario and overcome the Doppler shift by considering the analyzed characteristics of Doppler shift and NR. Specifically, the present disclosure describes various embodiments for determining and controlling the size of a beam for providing a cell of a LEO satellite network and signaling related information.

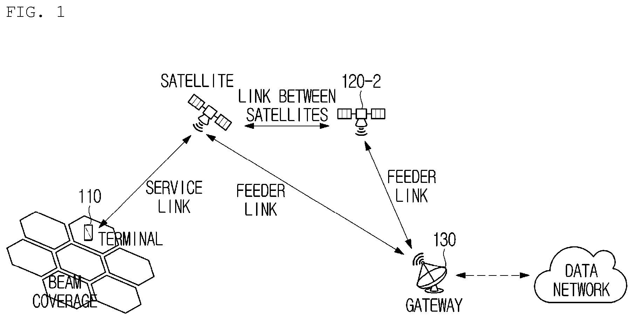

FIG. 1 illustrates an example of a network supporting satellite communication according to an embodiment of the present disclosure.

Referring to FIG. 1, the satellite network includes a terminal 110, satellites 120-1 and 120-2, and a gateway 130. The terminal 110 is a user equipment and may have mobility or may be a fixed device. The terminal 110 may support variable service bands and operation information according to the capability and application operation of the terminal 110. In addition, the terminal 110 may be operated in a fixed form, a form specialized for mobility, and various forms according to the characteristics of the terminal 110. The terminal 110 may be referred to as a 'UE (user equipment)'. The satellites 120-1 and 120-2 fly/operate in a fixed orbit and form a beam toward the ground to provide a cell with a certain size of coverage. The gateway 130 provides the satellites 120-1 and 120-2 with a link that allows them to access the network.

According to an example of the present disclosure, a link between the terminal 110 and the satellite 120-1 is called a service link, and a link between the satellites 120-1 and 120-2 and the gateway 130 is called a feeder link. Here, the link may be a link based on the NR standard. Alternatively, a link newly defined in an evolved next-generation wireless communication system may be adaptively applied, or a link based on various interfaces of a communication system introduced by industrial needs rather than the NR standard may be applied. In addition, an inter-satellite link (ISL) may be mainly used in the case of a regenerative satellite.

For example, for a transparent satellite based on NR-RAN architecture, a satellite radio interface of the feeder link and the service link may be NR-Uu. For a transparent satellite, the satellite performs radio frequency filtering and frequency conversion and amplification functions. For a regenerative satellite, onboard functions are built into the satellite, whereby the satellite may perform some or all of the base station functions, such as switching and routing, coding and modulation, and decoding and demodulation, in addition to radio frequency filtering, frequency conversion and amplification.

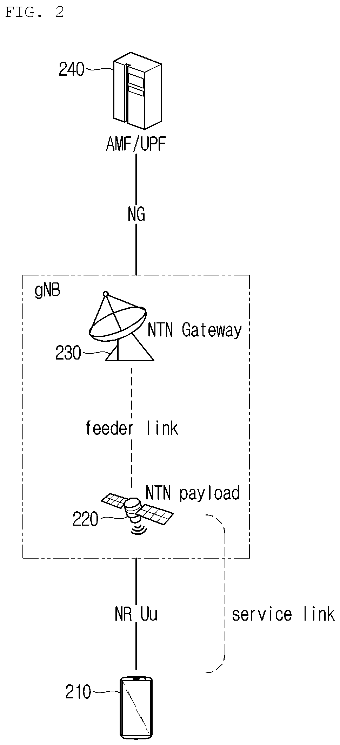

FIG. 2 illustrates another example of a network system supporting satellite communication according to an embodiment of the present disclosure. FIG. 2 illustrates an example of an NTN that provides non-terrestrial access to a terminal 210 by using an NTN payload 220 and an NTN gateway 230. Here, a link between the NTN payload 220 and the terminal 210 is a service link and may be based on a Uu interface. A link between the NTN payload 220 and the NTN gateway 230 is a feeder link. A link between the NTN gateway 230 and the AMF/UPF 240 may be based on an NG interface. The NTN payload 220 may transparently forward a wireless protocol received from the terminal 210 through the service link to the NTN gateway 230. Similarly, the NTN payload 220 may transparently forward a wireless protocol received from the NTN gateway 230 to the terminal 210 via the feeder link.

To this end, the following connectivity may be supported by the NTN payload 220. A base station may service multiple NTN payloads. An NTN payload may be serviced by multiple base stations.

The NTN payload 220 may change the carrier frequency before retransmitting data on the service link. That is, the NTN payload 220 may use different carrier frequencies on the service link and the feed link. For the NTN, as a network identifier, at least one of an AMF name, an NR cell global identifier (NCGI), a CgNB ID (identifier), a global gNB ID, a tracking area identity (TAI), Single Network Slice Selection Assistance information (S-NSSAI), a Network Slice AS Group (NSAG), a Network Identifier (NID), a Closed Access Group (CAG) ID, or a Local NG-RAN Node ID (Identifier) may be used, and additionally, a Mapped Cell ID may be further used. Here, the tracking area may correspond to a fixed geographical area.

A non-geosynchronous orbit (NGSO) includes a low earth orbit with altitudes of about 300 km to 1500 km and a medium earth orbit with altitudes of about 7000 km to 25000 km.

Service links may be classified into three types: earth-fixed, quasi-earth-fixed, and earth-moving. The earth-fixed type provides beam(s) that continuously cover the same geographic area at all times. For example, a satellite having a geosynchronous orbit (GSO) may provide an earth-fixed type service link. The quasi-earth-fixed type provides beam(s) that continuously cover the same geographic area for a limited period of time, and provides beams that cover different geographic areas for different periods of time. For example, a satellite having a non-geosynchronous orbit may provide a quasi-earth-fixed type service link using steerable beams. The earth-moving type provides beams whose coverage area slides on the surface of the Earth. For example, a satellite with a non-geosynchronous orbit could provide an Earth-mobile type service link using fixed or steerable beams.

Using a satellite with a non-geosynchronous orbit, the base station may provide quasi-earth-fixed cell coverage or earth-moving cell coverage. Using a satellite with a geosynchronous orbit, the base station may provide earth-fixed cell coverage. In the case of a non-geosynchronous orbit, a switch of the service link may be referred to a switch of a serving satellite.

Pre-compensation by the terminal may be performed as follows. For the serving cell, the network may broadcast common TA parameters and ephemeris information. Here, the common TA means an offset corresponding to an RTT between the NTN payload and a reference point (RP). Accordingly, before connecting to the NTN cell, the terminal will have information about the satellite orbit and the common TA, and further, will have a valid GNSS position. To achieve synchronization, before and while connecting to the NTN cell, the terminal may calculate a round trip time (RTT) of the service link based on the GNSS position and the satellite orbit, and pre-compensate a frame time difference (e.g., TTA) between the downlink and uplink.

The terminal may calculate frequency Doppler shift considering the terminal's position and satellite orbit. If the terminal does not have a valid GNSS position and/or a valid satellite orbit, the terminal will not be able to communicate with the network until it acquires a valid GNSS position and a valid satellite orbit. In a connected mode, the terminal may continuously update the TA and frequency pre-compensation. The terminal may be configured to report the TA during a random access procedure or in the connected mode. In the connected mode, event-triggered based TA reporting may be supported.

While pre-compensation for the instantaneous Doppler shift experienced on the service link is performed by the terminal, management of the Doppler shift and transponder frequency error experienced on the feeder link may be implemented by the satellite network.

The O&M (operations and maintenance) requirements are as follows. The following NTN related parameters may be provided to the base station providing non-terrestrial connectivity by the O&M. For example, orbital information describing coordinates or orbital trajectory information of an NTN satellite may be provided. The orbital information may be provided upon request of the base station or on a regular basis. As the format of the orbital information, two different sets may be supported. The first set includes satellite position and velocity state vectors, i.e., position and velocity. The second set may include at least one of major semi-axis, eccentricity, argument of periapsis, longitude of ascending node, inclination, or mean anomaly at epoch time to. Additionally, position information of NTN gateways and additional information for enabling base station operation for feeder/service link switches may be further provided.

Information related to the satellite's orbit and the position of the NTN gateway may be used for at least one of uplink timing or frequency synchronization. Additionally, information related to the satellite's orbit and the position of the NTN gateway may also be used for mobility management purposes and random access. The NTN related parameters provided to the base station by the O&M may depend on the type of service link supported (e.g., earth-fixed beam, quasi-earth-fixed beam, moving beam, etc.).

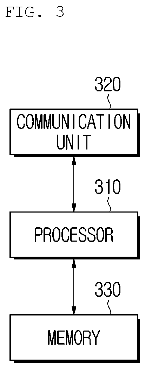

FIG. 3 illustrates a configuration of a device in a system supporting satellite communication according to an embodiment of the present disclosure. The device of FIG. 3 may be understood as a part of the structure of any one of the devices described with reference to FIG. 1, for example, the terminal 110, the satellites 120-1 and 120-2, and the gateway 130.

Referring to FIG. 3, the device may include a processor 310, a communication unit 320, and a memory 330.

The processor 310 may control the overall functions and operations of the device. The processor 310 may include an application-specific integrated circuit (ASIC), other chipsets, a logic circuit, and/or a data processing device.

The communication unit 320 is connected to the processor 310 to transmit and receive wireless signals. The communication unit 320 may include a baseband circuit for processing wireless signals. For example, the communication unit 320 may include a short-range communication unit, a mobile communication unit, and a broadcast receiving unit. In one embodiment, the communication unit 320 may transmit and receive data to and from other devices, such as a base station, a satellite, etc.

The memory 330 is hardware that stores various data processed in the processor 310. For example, the memory 330 may store an SIR value for a transmission target terminal of a transmitting terminal, information about a transmission target terminal group for each transmitting terminal, etc. In addition, the memory 330 may store applications, drivers, etc. to be driven by the processor 310. The memory 330 may include a random access memory (RAM) such as a dynamic random access memory (DRAM) or a static random access memory (SRAM), a read-only memory (ROM), an electrically erasable programmable read-only memory (EEPROM), a CD-ROM, a Blu-ray or other optical disk storage, a hard disk drive (HDD), a solid state drive (SSD), or a flash memory.

The structure of FIG. 3 may be understood as at least a part of a terminal, a base station, a satellite, and a gateway. If the structure of FIG. 3 is a part of a satellite, the satellite may further include other hardware devices necessary for orbital flight in addition to the components illustrated in FIG. 3. If the structure of FIG. 3 is a part of a gateway or a base station, the gateway or base station may further include components that support wired communication, etc.

The processor 310 described with reference to FIG. 3 may control the communication unit 320 and the memory 330 to control the device to perform operations according to various embodiments described below.

According to one embodiment, the processor 310 may receive first information about an elevation angle for supporting satellite communication and second information about a center of a beam, determine coverage of the beam based on the first information and the second information, determine a distance between the terminal and the center of the beam based on the second information, and select a serving beam for the terminal based on the coverage and distance of the beam.

According to one embodiment, the first information and the second information are received through system information, and the system information may further include at least one of a carrier frequency, a subcarrier spacing, a minimum elevation angle, a maximum elevation angle, preamble information, an altitude of a satellite, or a center location of a beam to support satellite communication for the terminal. In addition, the second information includes information on a center location of a beam transmitted by the satellite, and the first information has different values depending on movement of the satellite, and the serving beam may be determined by considering coverage of a beam having different sizes depending on the elevation angle.

According to one embodiment, each of the carrier frequency and the subcarrier spacing varies depending on a frequency range (FR) set for the terminal, and the subcarrier spacing supported in FR1 is 15, 30, or 60 kHz, and the subcarrier spacing supported in FR2 is 60 kHz or 120 kHz, and the serving beam may be determined by considering the coverage of the beam having different sizes depending on the frequency range set for the terminal.

According to one embodiment, the coverage of the beam varies depending on the subcarrier spacing set for the terminal, the frequency range, and the elevation angle due to the movement of the satellite, and the coverage of the beam may change to 1/2 as the subcarrier spacing increases from N to 2N, and the coverage of the beam may change to 1/5 size as the frequency range increases from M to 2M. In addition, the serving beam may be selected by considering the elevation angle due to the movement of the satellite.

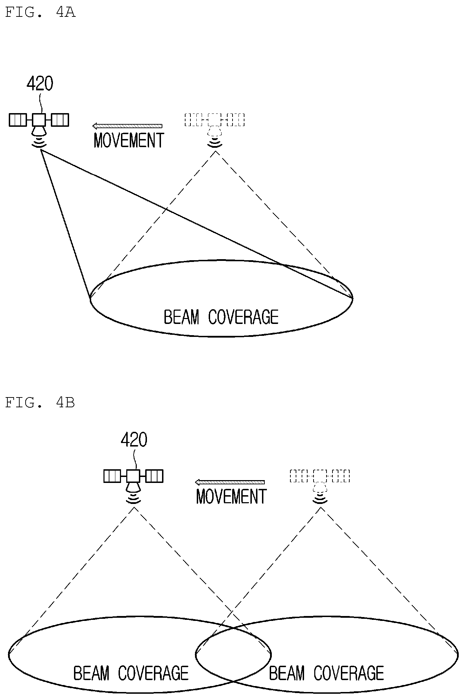

FIG. 4a and FIG. 4b illustrate fixed beam cells and moving beam cells provided by a satellite in a communication system supporting satellite communication according to an embodiment of the present disclosure. FIG. 4a illustrates a fixed beam cell, and FIG. 4b illustrates a moving beam cell. Referring to FIG. 4a, when a fixed beam cell is provided, even if a satellite 420 moves, the position and size of the beam coverage formed on the ground may not substantially change. Referring to FIG. 4b, when a moving beam cell is provided, the position of the beam coverage formed on the ground may move along with the movement of the satellite 420.

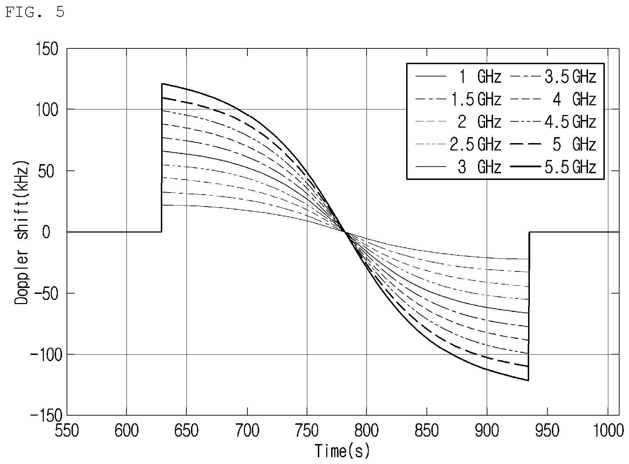

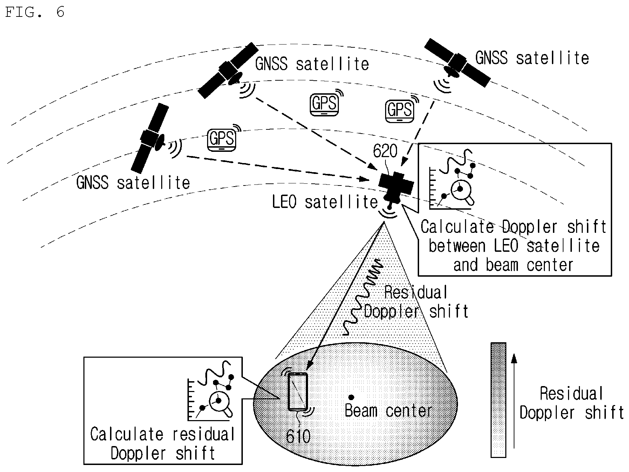

FIG. 5 illustrates simulation results for Doppler shift that may occur for each carrier frequency in a communication system supporting satellite communication according to an embodiment of the present disclosure. FIG. 5 shows the Doppler shift between a terminal located on the ground and a satellite providing coverage to the ground by carrier frequency. In the simulation to obtain the results of FIG. 5, the satellite is set to fly at an altitude of 600 km, and the frequency is selected within the range of FR1 (frequency range 1) as an example. In FIG. 5, the satellite is located closest to the center of the beam at about 780 seconds. Being located closest to the center of the beam may be understood as a state in which the elevation angle of the beam direction with respect to the ground is closest to a right angle. As can be seen in FIG. 5, the Doppler shift occurs more significantly as the satellite moves away from the center of the beam, and it can be seen that the size of the Doppler shift varies depending on the frequency even at the same time. The Doppler shift that may occur as shown in FIG. 5 may affect communication quality. Therefore, compensation for the Doppler shift is necessary. For compensation in the downlink, a pre-compensation method may be used. The pre-compensation method may be performed as shown in FIG. 6 below.

FIG. 6 illustrates a concept of pre-compensation for Doppler shift in a communication system supporting satellite communication according to an embodiment of the present disclosure.

Referring to FIG. 6, a satellite 620 forms beam coverage on the ground, and a terminal 610 is located within the beam coverage. According to one embodiment, a low earth orbit satellite 620 receives reference time information from multiple GNSS satellites and calculates positions of the low earth orbit satellite and a beam center. Thereafter, the low earth orbit satellite calculates and compensates for Doppler shift for a beam center 602, and then transmits a compensated signal. If the terminal 610 is not located at the beam center, a difference may occur between the actual Doppler shift and the compensated Doppler shift.

In the present disclosure, the difference between the actual Doppler shift and the compensated Doppler shift, i.e., a residual Doppler value due to the imperfection of compensation caused by not being located at the beam center, may be referred to as residual Doppler shift (RDS), residual Doppler value, differential Doppler, etc. When the RDS occurs, the terminal 610 may calculate and compensate for the RDS. In this case, the satellite 620 has the advantage of not having to compensate for the Doppler shift for all terminals located at different points within the beam coverage. In addition, since the RDS is very small compared to the Doppler shift, it is not a big burden for the terminal 610 to measure and compensate for it.

In FIG. 6, the beam center 602 means a point where the central axis of the beam radiating toward the ground touches the ground. Therefore, the beam center 602 may be understood as the center of coverage. Hereinafter, in the present disclosure, the beam center may be referred to as a 'coverage center', a 'cell center', or another term having an equivalent technical meaning thereto. In particular, the beam center according to the present disclosure may be referred to as a reference location defining a cell center. Furthermore, various embodiments related to beam center information will be described in more detail below.

As mentioned above, the characteristics of Doppler shift and residual Doppler shift may vary depending on the frequency and location within the coverage. The presence of Doppler shift and residual Doppler shift affects communication performance. For example, communication performance may be measured by bit error rate (BER), and the relationship between BER and Doppler frequency may be explained as follows.

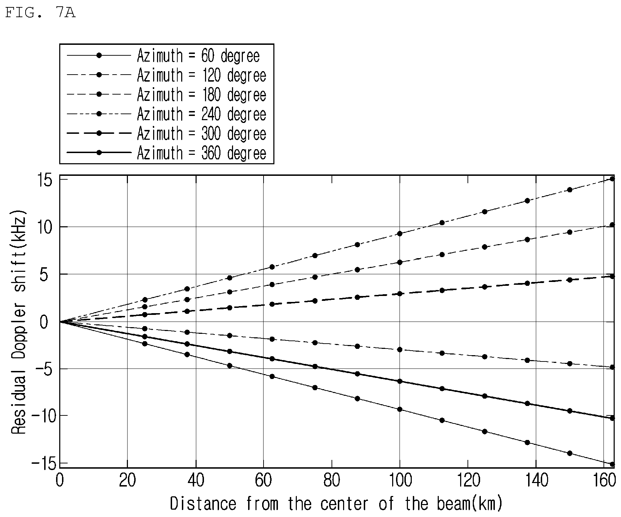

FIGS. 7a to 7d illustrate variations in residual Doppler shift according to a distance from a beam center in a communication system supporting satellite communication according to an embodiment of the present disclosure.

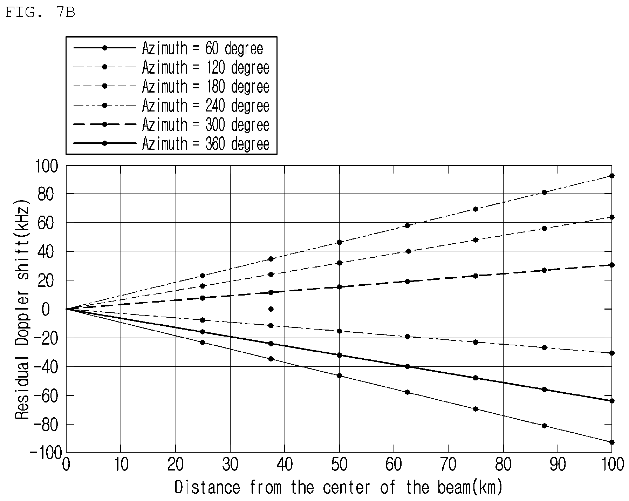

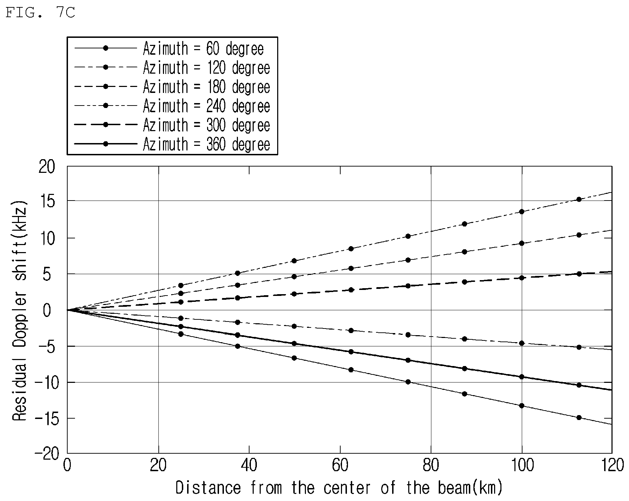

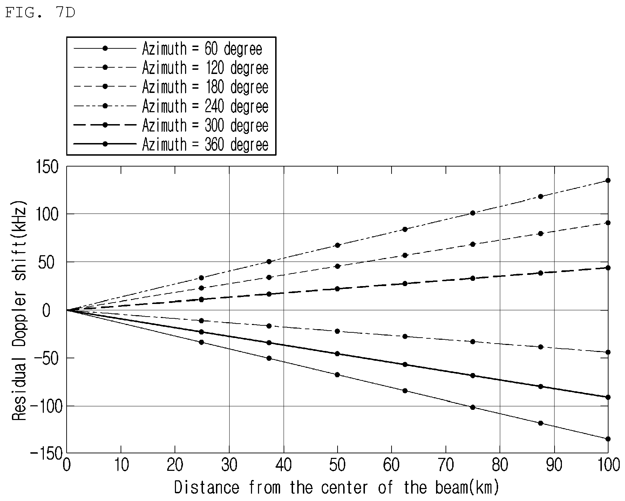

Referring to FIGS. 7a and 7b, the RDS changes when the satellite moves at an altitude of 550 km are shown, and FIGS. 7c and 7d show the RDS changes when the satellite moves at an altitude of 450 km. FIGS. 7a, 7b, 7c, and 7d are all experimental results when the center frequency is 2 and 20 GHz, respectively. Referring to FIGS. 7a to 7d, it is confirmed that the absolute value of RDS gradually increases as the distance from the center of the beam increases.

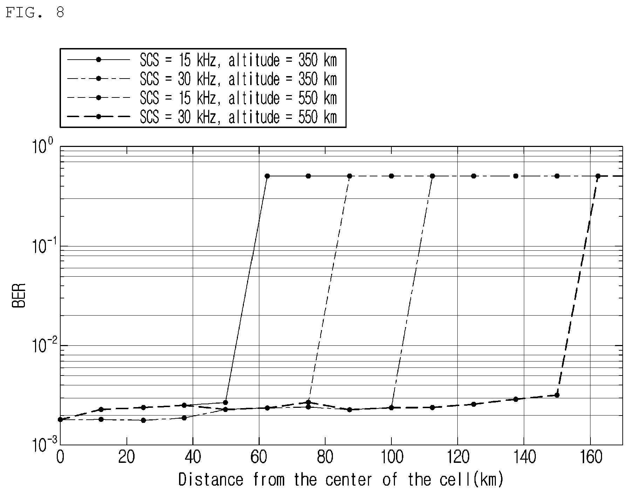

FIG. 8 illustrates variations in BER according to a distance from a beam center in a communication system supporting satellite communication according to an embodiment of the present disclosure. FIG. 8 shows the variation of BER according to the distance from the center of the beam for various subcarrier spacings (SCS). First, looking at the variation of BER, it can be confirmed that the BER increases rapidly when the distance from the center of the beam exceeds a certain level. In addition, the higher the satellite altitude and the larger the SCS, the larger the critical distance at which the BER increases rapidly. This shows the possibility of controlling the boundary of the coverage where the BER is maintained below a certain level by changing the satellite altitude or the SCS.

Based on this relationship, the beam size may be variably controlled according to the satellite network environment. That is, according to various embodiments, the beam size may be adjusted according to the carrier frequency and SCS. Alternatively, if the carrier frequency and SCS are determined, the beam size may be determined based on the given carrier frequency and SCS.

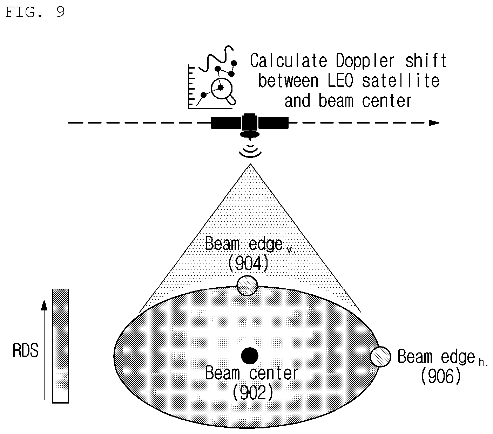

FIG. 9 illustrates differences in residual Doppler shift according to locations within coverage in a communication system supporting satellite communication according to an embodiment of the present disclosure. In FIG. 9, a satellite 920 moves to the right and forms beam coverage on the ground. In the beam coverage, when comparing three points, i.e., a beam center 902, a vertical beam edge 904, and a horizontal beam edge 906, the RDS at the beam center 902 is the smallest, and the RDS at the horizontal beam edge 906 is the largest. The RDS at the vertical beam edge 904 is larger than that at the beam center 902 and smaller than that at the horizontal beam edge 906. Therefore, the characteristics of the RDS experienced by a terminal may vary depending on the location of the terminal within the coverage.

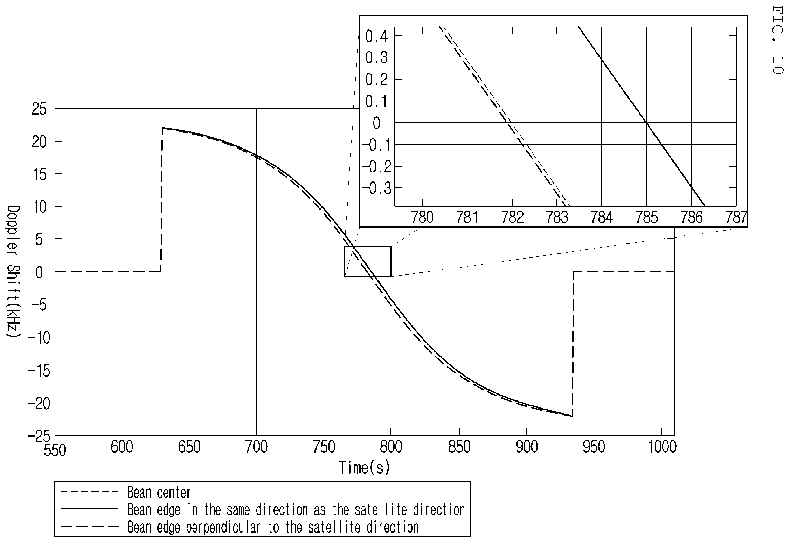

FIG. 10 illustrates a comparison of patterns of Doppler shift at a beam center and a beam boundary in a communication system supporting satellite communication according to an embodiment of the present disclosure. FIG. 10 shows Doppler shift patterns according to satellite movement at each of the beam center, horizontal beam boundary, and vertical beam boundary. The differences between the three Doppler shift patterns may be understood as differences in RDS. Based on the Doppler shift pattern at the beam center, the Doppler shift pattern at the horizontal beam boundary has a larger difference than that at the vertical beam boundary. This occurs because the points at which the elevation angle for the satellite at each point is maximized are different.

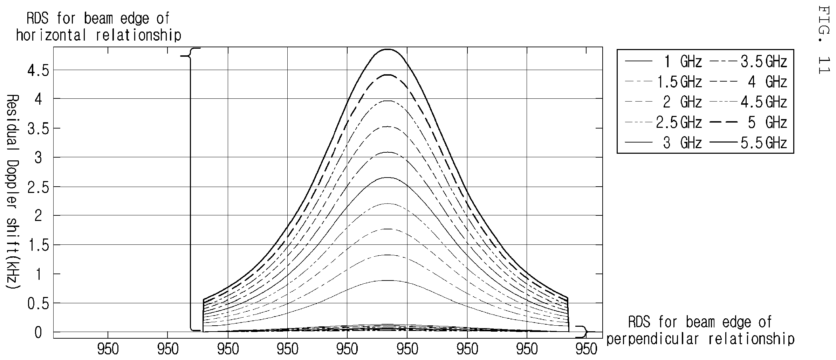

FIG. 11 illustrates residual Doppler shift of a satellite according to carrier frequency that occur at a beam edge located in a direction perpendicular to a moving direction of the satellite in a communication system supporting satellite communication according to an embodiment of the present disclosure. FIG. 11 shows RDS patterns according to satellite movement at a horizontal beam boundary and a vertical beam boundary. Referring to FIG. 11, it can be confirmed that the magnitude of the RDS at the horizontal beam boundary is larger than that of the RDS at the vertical beam boundary.

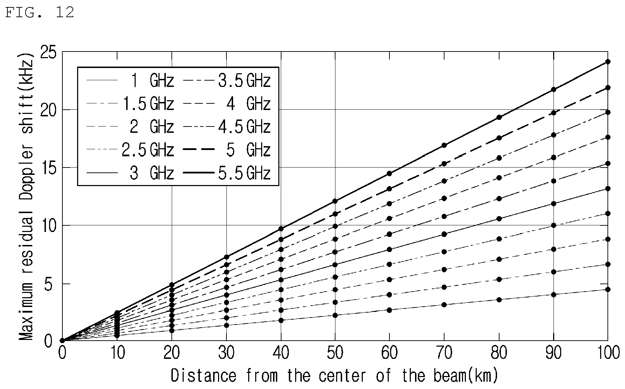

FIG. 12 illustrates maximum residual Doppler shift according to a distance from a beam center in a communication system supporting satellite communication according to an embodiment of the present disclosure. FIG. 12 shows the maximum residual Doppler shift according to the distance from the center of the beam, which is plotted by linear regression. Referring to FIG. 12, the maximum RDS has a linear distribution with respect to the distance, regardless of the carrier frequency. This shows the possibility of estimating the RDS based on the distance from the center of the beam based on the linear relationship.

Considering the limitation of the maximum likelihood (ML) estimation and the characteristics of the RDS, the major semi-axis of the beam coverage that has beam robustness against the Doppler effect may be derived.

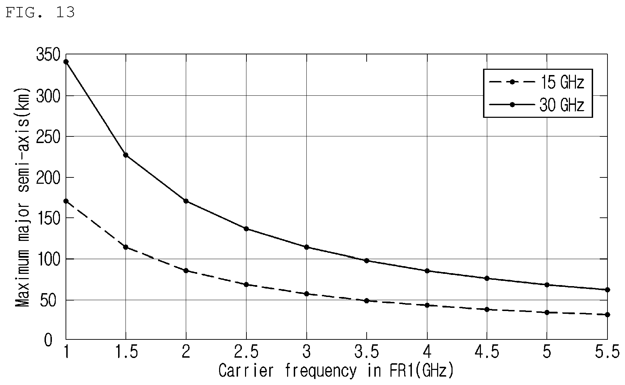

FIG. 13 illustrates a major semi-axis of effective beam coverage according to carrier frequency and SCS in a communication system supporting satellite communication according to an embodiment of the present disclosure.

Since the maximum RDS has a linear relationship with the distance from the center of the beam, the major semi-axis of the beam coverage may be determined. The smaller the carrier frequency and the larger the SCS, the larger the major semi-axis of the beam coverage. Based on this relationship, the beam size may be variably controlled according to the satellite network environment. That is, according to various embodiments, the beam size may be adjusted according to the carrier frequency and the SCS. Alternatively, if the carrier frequency and the SCS are determined, the beam size may be determined based on the given carrier frequency and SCS.

As described above, the carrier frequency and the SCS affect the beam size or coverage size at which the BER is maintained below a certain level. Therefore, the satellite may signal information related to the carrier frequency and/or the SCS and the beam size or coverage size to a terminal attempting to connect to the satellite or a terminal currently connected. Here, the specific formats and values of the information related to the carrier frequency and/or the SCS and the beam size or coverage size may be variously defined. In addition, a point in time at which the information related to the carrier frequency and/or the SCS and the beam size or coverage size is transmitted may also be variously defined.

In a satellite network, the size of the beam coverage provided by a beam transmitted from a satellite may vary depending on the elevation angle for the satellite from the beam center within the coverage. In general, the size of the beam coverage is smallest when the elevation angle is maximum, and the size of the beam coverage increases as the elevation angle increases.

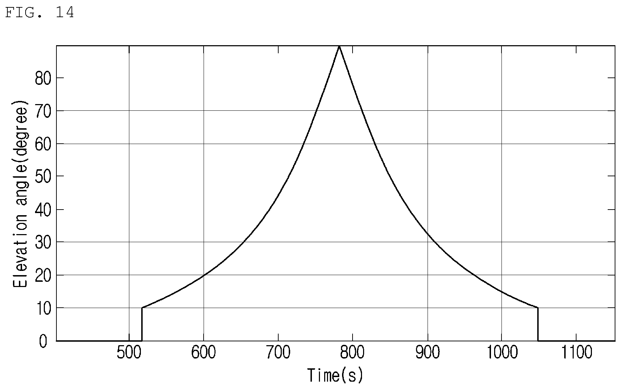

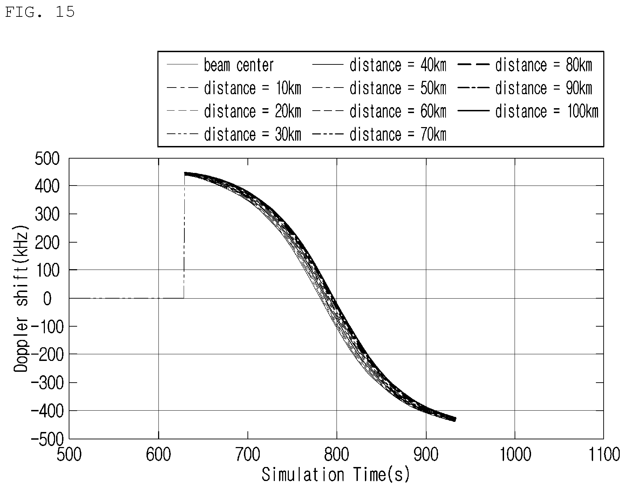

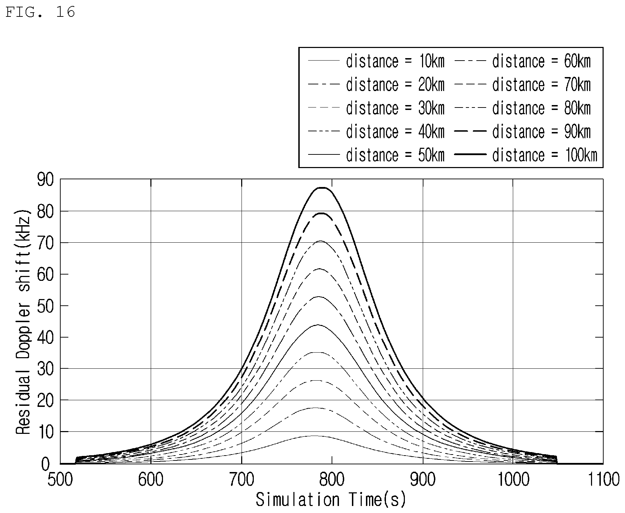

FIG. 14 illustrates a change in elevation angle according to movement of a satellite in a communication system supporting satellite communication according to an embodiment of the present disclosure. Referring to FIG. 14, as the satellite moves over time, the elevation angle for the satellite at the center of the beam within the coverage changes. At this time, the Doppler shift and RDS are as shown in FIGS. 15 and 16 below.

FIG. 15 illustrates a change in Doppler shift according to a distance from a beam center to a beam edge according to movement of a satellite in a communication system supporting satellite communication according to an embodiment of the present disclosure. FIG. 15 shows a change in Doppler shift observed in the same situation when a change in elevation angle changes due to the movement of the satellite is the same as that in FIG. 14. Referring to FIG. 15, it can be confirmed that a change in inclination varies depending on the distance from the center of the beam. In addition, it can be confirmed that the absolute value of the Doppler shift at a point in time where the elevation angle at each point is the largest is the minimum, and that the absolute value of the Doppler shift increases as the satellite moves and the elevation angle decreases.

FIG. 16 illustrates a change in residual Doppler shift according to a distance from a beam center to a beam edge according to movement of a satellite in a communication system supporting satellite communication according to an embodiment of the present disclosure. FIG. 16 shows the change in RDS observed in the same situation when a change in elevation angle changes due to the movement of the satellite is the same as that in FIG. 14. Referring to FIG. 16, it can be confirmed that a maximum value varies depending on the distance from the beam center. In addition, it can be confirmed that the RDS is maximum at the point where the elevation angle at each point is the largest, and that the RDS decreases as the satellite moves and the elevation angle decreases.

According to the relationship between the elevation angle and Doppler shift/RDS mentioned above, it is possible to optimize the size of the effective cell coverage by changing the SCS according to the movement of the satellite. For example, examples of the timing of changing the SCS are as shown in [Table 1] below.

[Table 1]

| Carrier frequency | SCS: elevation angle changed from 60 to 120Hz | Reliable beam size |
|---|---|---|
| 20 GHz | 43 | 100 → 60km |
| 25 GHz | 39 | 100 → 50km |
| 30 GHz | 36 | 100 → 40km |
| 35 GHz | 34 | 100 → 30km |
| 40 GHz | 31 | 100 → 30km |
| 45 GHz | 29.9 | 100 → 30km |
| 50 GHz | 28.5 | 100 → 20km |
| 55 GHz | 27.2 | 100 → 20km |

As described above, the elevation angle and SCS of the satellite with respect to the beam center affect the size of the coverage where the BER is maintained below a certain level. Therefore, the satellite may signal information related to the elevation angle and/or SCS and the beam size or coverage size to a terminal attempting to connect to the satellite or a terminal currently connected. Here, the specific formats and values of the information related to the elevation angle and/or SCS and the beam size or coverage size may be variously defined. In addition, a point in time at which the information related to the elevation angle and/or SCS and the beam size or coverage size is transmitted may also be variously defined. That is, according to one embodiment, the coverage may be determined or calculated based on the elevation angle. Here, the elevation angle may be determined based on a reference location of the cell (e.g., the center of the cell). In other words, the coverage provided by the satellite is an elevation-dependent coverage, and the elevation-dependent coverage can be formulated based on at least one of the elevation angle and the center location.

As previously discussed, the size of the coverage (hereinafter referred to as 'effective coverage size' or 'beam size') where the BER is maintained below a certain level may vary depending on the satellite status (e.g., the elevation angle of the satellite) and the characteristics of the signal transmitted from the satellite (e.g., carrier frequency, SCS, etc.). Information on the effective coverage size may be utilized in various ways. For example, the effective coverage size may be used for cell selection of a terminal. Hereinafter, various embodiments of selecting a cell based on the effective coverage size will be described.

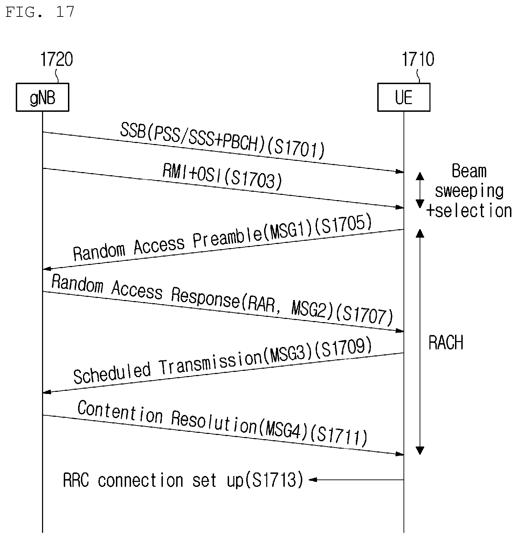

FIG. 17 illustrates an initial access procedure in a communication system supporting satellite communication according to an embodiment of the present disclosure. FIG. 17 illustrates a signaling procedure between a terminal 1710 and a base station 1720.

Referring to FIG. 17, in step S1701, for initial connection of the terminal 1710, the base station 1720 transmits SSBs through beam sweeping. Each of the SSBs may include a PSS/SSS and a PBCH. The PSS/SSS is a signal having one of the pre-arranged sequences for synchronization, and the PBCH includes a master information block (MIB).

In step S1703, the base station 1720 transmits RMI (remaining minimum system information) and OSI (other system information). RMI and OSI are system information other than MIB, and RMI includes system information transmitted without a request from the terminal 1710, and OSI includes system information transmitted by a request according to an on-demand method of the terminal 1710. That is, although not shown in FIG. 17, the request from the terminal 1710 may be transmitted to the base station 1720 prior to transmission of the OSI. Steps S1701 and S1703 may be repeatedly performed through beam sweeping, and at this time, the terminal 1710 may perform beam selection.

Thereafter, in step S1705, the terminal 1710 transmits a random access preamble based on the system information received in step S1703. In step S1707, the base station 1720 transmits a random access response (RAR) message as a response to the random access preamble. In step S1709, the terminal 1710 performs scheduled transmission through resource indicated by the RAR. In step S1711, the base station 1720 transmits a contention resolution message. Thereafter, in step S1713, the terminal 1710 transmits a message for RRC (radio resource control) setup. Accordingly, a connection establishment procedure may be performed.

As described with reference to FIG. 17, the terminal may select an appropriate beam through beam management operation during the initial connection procedure. At this time, for pre-compensation and RDS-based beam setup, the terminal performing the initial connection may use at least some of the information as shown in [Table 2] below.

[Table 2]

| Item | Description |
|---|---|
| Tracking area | Fixed on the Earth |
| Location information of terminal | Can be obtained using GNSS technology. However, it is not limited thereto, and location information obtained or determined in other ways may also be used. |
| Satellite identification information | ID or index. It may be provided to the terminal through system information or dedicated RRC signaling. |
| Altitude of low earth orbit | Can be verified based on satellite identification information |

Additionally, at least some of the beam-related information shown in [Table 3] below may be signaled to the terminal.

[Table 3]

| Item | Description |
|---|---|
| Carrier frequency | Carrier frequency used by the satellite |
| Subcarrier spacing | Subcarrier spacing applied to the signal transmitted by the satellite |

The carrier frequency information or the subcarrier spacing information, as shown in [Table 3], may be transmitted to the terminal via any one of the various signaling methods described with reference to FIG. 17. For example, the carrier frequency information may be transmitted via a system information block (SIB). Specifically, the carrier frequency information may be included in one of the downlinkConfigCommon information element (IE) included in SIB1 and the IEs included in SIB3. In addition, the subcarrier spacing information may be transmitted via the MIB or the SIB. Specifically, the subcarrier spacing information may be included in the subCarrierSpacingCommon IE included in the MIB and the ServingCellConfigCommon IE included in the SIB1. The carrier frequency information and the subcarrier spacing information may be obtained via other IEs other than the listed IEs. In an existing system, the subcarrier spacing information included in the MIB may be used to perform an initial connection. In addition, the carrier frequency information included in the SIB may be used to set a signal processing operation for communication or for cell reselection. On the other hand, according to various embodiments of the present disclosure, the subcarrier spacing information and the carrier frequency information may be used to select a beam. That is, based on at least some of the information such as [Table 2] and [Table 3], the terminal may determine a reliable beam size, a distance between the terminal and the beam center. Then, the terminal may determine whether the terminal is located within the effective coverage area and whether to use the corresponding beam as a serving beam. That is, the terminal may perform beam selection. Specific embodiments for beam selection are as follows.

More specifically, the terminal checks elevation-dependent coverage as coverage of a cell or beam based on the SCS, the elevation angle of the satellite, and the reference location of the cell. In particular, the terminal may receive information on the beam center through at least one of RRC, MIB, or SIB. The information on the beam center is information related to the satellite, and may include, for example, epoch time information and parameters for accessing the satellite, information on the reference location of the serving cell, or information for predicting the reference location of the serving cell. For example, the information on the reference location may be determined by considering distance information between the terminal and the satellite, information that may be defined based on the carrier frequency, information determined by considering a cell identifier, information defining a beam center, a coverage center, a cell center, and the like. For example, the cell coverage or the cell size or the beam size may vary by considering the elevation angle of the satellite, orbital information, and characteristics of a signal transmitted from the satellite.

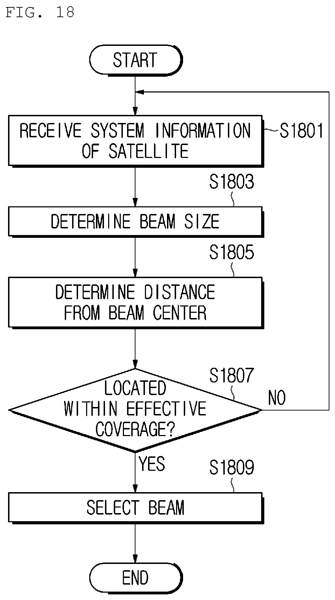

FIG. 18 illustrates an example of a procedure for selecting a beam according to an embodiment of the present disclosure. FIG. 18 illustrates a method of operating a terminal.

Referring to FIG. 18, in step S1801, the terminal receives system information of the satellite. Here, the satellite operates as a base station, and the system information includes a MIB included in an SSB and at least one SIB received through a PDSCH (physical downlink shared channel). Specifically, the terminal may detect a synchronization signal through a cell search operation, receive and decode an MIB included in an SSB including the synchronization signal, and receive and decode at least one SIB using information acquired through the MIB. At this time, the synchronization signal, the MIB, and the SIB may be transmitted through any one of a plurality of beams used by the satellite, and a beam forwarding the synchronization signal, the MIB, and the SIB received by the terminal is treated as a candidate beam for subsequent operations. By receiving the system information, the terminal may obtain information necessary for subsequent operations. For example, the terminal may obtain subcarrier spacing information and carrier frequency information.

In step S1803, the terminal determines a beam size. In other words, the terminal determines the size of a beam that forwards system information among at least one beam that may be currently received. That is, the terminal may determine the size of the effective coverage of the beam that is currently being monitored. To this end, the terminal may utilize the relationship between the radius of the effective beam coverage of at least one of the carrier frequency, the subcarrier spacing, the RDS, or the altitude of the satellite. Specifically, the terminal may determine the maximum RDS based on the orbit or altitude of the satellite and the carrier frequency, and determine a reliable maximum beam size, i.e., the effective coverage size, based on the maximum RDS and the subcarrier spacing. Additionally, the terminal may further consider the elevation angle of the satellite. That is, the angle at which the beam is incident on the ground varies depending on the elevation angle of the satellite, and accordingly, the size or shape (e.g., circle, ellipse) of the coverage may vary. Accordingly, the terminal may determine the size of the effective coverage based on at least one of the carrier frequency, subcarrier spacing, RDS, satellite altitude, and elevation angle.

In step S1805, the terminal determines a distance from the beam center. In other words, the terminal checks how far the terminal is from the beam center. To this end, the terminal may use the location information of the terminal. That is, the terminal may obtain the location information of the terminal, check the center location of a candidate beam, and then determine a distance between the location of the terminal and the center location of the beam. Here, the center location of the beam may be checked in various ways. According to one embodiment, the center location of the beam may be checked based on a previously known orbit of the satellite and identification information of the satellite. According to another embodiment, the center location of the beam may be explicitly or implicitly signaled via system information.

In step S1807, the terminal determines whether the terminal is located within the effective coverage of the beam. To this end, the terminal compares the size of the beam determined in step S1803 and the distance from the beam center determined in step S1805. That is, if the distance from the beam center is less than or equal to the radius of coverage according to the size of the beam, the terminal may determine that the terminal is located within the effective coverage of the beam.

If the terminal is located within the effective coverage of the beam, in step S1809, the terminal selects the beam. In other words, the terminal selects the beam that forwarded the system information to be used as the serving beam. That is, the terminal may decide to perform the subsequent random access operation using the beam.

On the other hand, if the terminal is not located within the effective coverage of the beam, the terminal returns to step S1801. Accordingly, the terminal may search for another beam of the satellite or another satellite, and repeat the above-described operations for the other searched beam.

According to the embodiment described with reference to FIG. 18, the terminal may select a serving beam. To this end, the terminal uses the center location of the candidate beam currently observed. As described above, the center location of the beam may be checked in various ways. For example, the center location of the beam may be checked based on ab area in which the terminal is currently located. When the arrangement of the satellite base stations is determined, the center locations of the beams transmitted by the corresponding satellite base stations may be fixedly determined. In other words, if the satellite base stations are arranged on the ground, the center locations of the beams transmitted from the satellite may be fixedly determined by utilizing the satellite base stations. Since the beam coverage of the satellite base station is larger than that of the ground base station, the correspondence between the area and the center location of the beam may be derived. In this case, the correspondence between the area and the center location of the beam may be defined in advance, and the terminal may check the center location of the beam from the area in which it is currently located, by using the information on the correspondence.

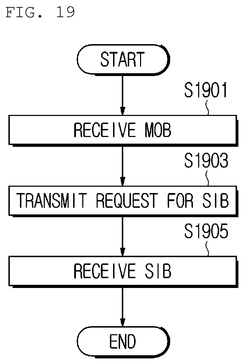

FIG. 19 illustrates an example of a procedure for obtaining information for beam selection according to an embodiment of the present disclosure. FIG. 19 illustrates a method of operating a terminal.

Referring to FIG. 19, in step S1901, the terminal receives a MIB. Through the MIB, the terminal may obtain system information. For example, the terminal may obtain information on at least one of a system frame number, a subcarrier spacing, a subcarrier offset, a DMRS (demodulation reference signal) type, a PDCCH (physical downlink control channel) setup for SIB1, or whether the cell is barred.

In step S1903, the terminal transmits a request for an SIB. The terminal may request the satellite to transmit the SIB in order to receive the SIB transmitted in an on-demand manner. To this end, the terminal may receive SIB1 based on information included in the MIB (e.g., PDCCH configuration for SIB1) and obtain information on a random access channel from SIB1. Then, the terminal may transmit a signal for a SIB request through a random access channel.

In step S1905, the terminal may receive at least one SIB. That is, the terminal may receive at least one SIB transmitted by the satellite in response to the request transmitted in step S1903. Through the at least one SIB, the terminal may obtain various information necessary for performing communication. In particular, according to one embodiment of the present disclosure, the terminal may obtain information for beam selection, for example, information about a carrier frequency. Furthermore, the terminal may further obtain other information necessary for determining a distance from a center location of the beam.

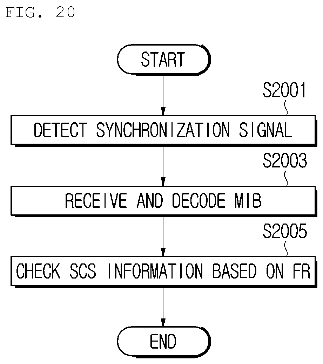

FIG. 20 illustrates an example of a procedure for obtaining subcarrier spacing information according to an embodiment of the present disclosure. FIG. 20 illustrates a method of operating a terminal.

Referring to FIG. 20, in step S2001, the terminal detects a synchronization signal. The positions of the frequency axis where the synchronization signal may be transmitted are predefined. Accordingly, the terminal may detect a primary synchronization signal (PSS) and a secondary synchronization signal (SSS) composed of one of the predefined sequences at the positions of the predefined frequency axis. By detecting the synchronization signal, the terminal may determine the structure of the SSB.

In step S2003, the terminal receives a MIB and decodes the MIB. The terminal may receive the MIB received together with a DMRS through a PBCH (physical broadcast channel) included in the SSB. The terminal may decode the MIB using the channel information estimated based on the DMRS. By decoding the MIB, the terminal may obtain parameters indicating information about the cell. At this time, the parameters may include parameters indicating the subcarrier spacing.

In step S2005, the terminal checks the subcarrier spacing information based on a FR (frequency range). FR is a unit for distinguishing the frequency used in the system to which the terminal and the satellite belong, and may be distinguished, for example, as FR1 (e.g., 417 to 7,125 MHz) and FR2 (e.g., 24,250 to 52,600 MHz). The supportable subcarrier spacings may vary depending on the FR, and therefore, the interpretation of the value of the parameter indicating the subcarrier spacing may vary depending on the FR to which the frequency at which the MIB is received belongs. For example, if the synchronization signal is detected and the frequency at which the MIB is received belongs to FR1, the terminal may interpret the subcarrier spacing as 15 kHz or 30 kHz depending on the value of the parameter. For example, if the synchronization signal is detected and the frequency at which the MIB is received belongs to FR2, the terminal may interpret the subcarrier spacing as 60 kHz or 120 kHz depending on the value of the parameter.

According to the above-described embodiments, the terminal may obtain necessary information and select an appropriate beam based on the obtained information and the predefined information. At this time, it may be required to determine the coverage of the beam in order to select the beam. For example, the coverage may be determined or calculated based on the elevation angle. Here, the elevation angle may be determined based on the reference location of the cell (e.g., the center of the cell). In other words, the coverage provided by the satellite is an elevation-dependent coverage, and the elevation-dependent coverage can be calculated (formulated) based on at least one of the elevation angle or the center location.

According to another embodiment of the present disclosure, carrier frequency information, subcarrier spacing information, and beam center location information may also be signaled through system information. In this case, the information signaled through the system information is as shown in [Table 4] below.

[Table 4]

| Item | Description |
| --- | --- |
| Center location of beam | Center location of beam transmitted by satellite |
| Carrier frequency | Carrier frequency used by satellite |
| Subcarrier spacing | Subcarrier spacing applied to signal transmitted by satellite |

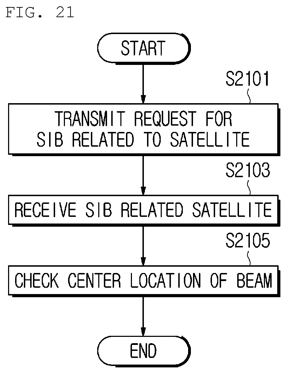

FIG. 21 illustrates an example of a procedure for obtaining beam center location information according to an embodiment of the present disclosure. FIG. 21 illustrates a method of operating a terminal. Referring to FIG. 21, in step S2101, the terminal transmits a request for an SIB related to a satellite. That is, the SIB related to the satellite is transmitted in an on-demand manner, and accordingly, the terminal may request the satellite to transmit the SIB. To this end, the terminal may request the SIB related to the satellite by transmitting a random access preamble. For example, the SIB related to the satellite may be an SIB including satellite auxiliary information for NTN connection. In step S2103, the terminal receives the SIB related to the satellite. For example, the terminal may receive the SIB related to the satellite through a resource indicated by an RAR transmitted in response to the random access preamble for requesting system information. As another example, the terminal may transmit a message requesting the SIB through a resource indicated by an RAR transmitted in response to the random access preamble, and then receive the SIB related to the satellite. The SIB related to the satellite may include at least one of information about measurements for the satellite, information about NTN connection, information about orbit, information about TA, information about synchronization, information about NTN neighboring cells, or information about reference location. In particular, according to one embodiment, the SIB related to the satellite may include information about a center location of a beam.

In step S2105, the terminal checks the center location of the beam. That is, the terminal may check the center location of the beam by interpreting the information about the center location of the beam included in the received SIB. The information about the center location of the beam may indicate absolute location coordinates or may indicate a relative location with respect to other location information included in the SIB. Accordingly, the terminal may select the beam by using the center location of the beam.

As in the described embodiment, the terminal may check the center location of the beam through the SIB. That is, the SIB may include information about the center location of the beam. For example, the SIB related to the satellite may include at least one of ephemeris data, common TA parameters, HARQ-related offsets (e.g., k_offset), validity duration for uplink synchronization information, or epoch information as parameters required for the terminal to access NR through the NTN connection (e.g., ntn-Config). In addition, the SIB related to the satellite may include time information (e.g., t-Service) about the point in time when a cell provided through the NTN quasi-earth fixed system stops providing service for an area currently covered by the satellite. In addition, the SIB related to the satellite may include information which may be used for initiation of location-based measurement, as information about the reference location of the serving cell provided through the NTN quasi-earth fixed system (e.g., referenceLocation). In addition, the SIB related to the satellite may include information used for initiation of location-based measurement, as distance information from a serving cell reference location (e.g., distanceThresh). Here, the distance information may be used to determine a candidate cell and to rank the candidate cells. In addition, the SIB related to the satellite may include information providing a list of NTN neighboring cells (e.g., ntn-NeighCellConfigList, lateNonCriticalExtension), and information for each satellite included in the list may include ntn-Config, carrier frequency, and cell identifier (e.g., PhysCellId). In addition, the SIB related to the satellite may include center location information of a cell provided by the satellite (e.g., centerOfCoverage) .

Accordingly, the terminal determines the beam size and serving beam by considering Tables 1 to 3 and at least one of the parameters for NTN connection, the elevation angle or reference information described above.

Accordingly, a serving beam for communication with a satellite may be selected based on the beam size. Information required to determine the aforementioned beam size and information required to determine the center location of the beam may be provided by a satellite base station or at least one ground base station. Here, parameters for the terminal may be set by a serving base station among the satellite or ground base stations that are connected to the terminal, and different serving base stations may be connected according to a service for the terminal. For example, the terminal may be connected to one ground base station to receive basic parameters for control, and may selectively receive necessary information through the satellite base station according to the needs of the terminal. In the embodiment of the present disclosure, specific examples of which parameter is provided by the ground base station or the satellite base station may vary depending on various embodiments or scenarios.

In addition, the terminal determines the beam size in a situation in which a subcarrier spacing and a carrier frequency are given, and selects a beam based on the beam size. Furthermore, according to another embodiment, it is possible to change the beam size by changing at least one of the subcarrier spacing or the carrier frequency according to a situation. For example, it is possible to dynamically control the beam size according to the load of a current cell, occurrence of a coverage hole, etc. According to the change in the beam size, the amount of available resources may also be adjusted. Accordingly, the service that may be provided (e.g., URLL (ultra-reliable low latency), eMBB (enhanced mobile broadband), etc.) may also be changed.

The various embodiments described above have considered the case where the base station to which the terminal may connect is a satellite base station. However, according to other embodiments, the embodiments described above may be applied in a situation where the terminal may connect to not only a satellite base station but also a ground base station, in other words, in a satellite-ground integrated environment. In this case, more diverse operating scenarios may be applied.

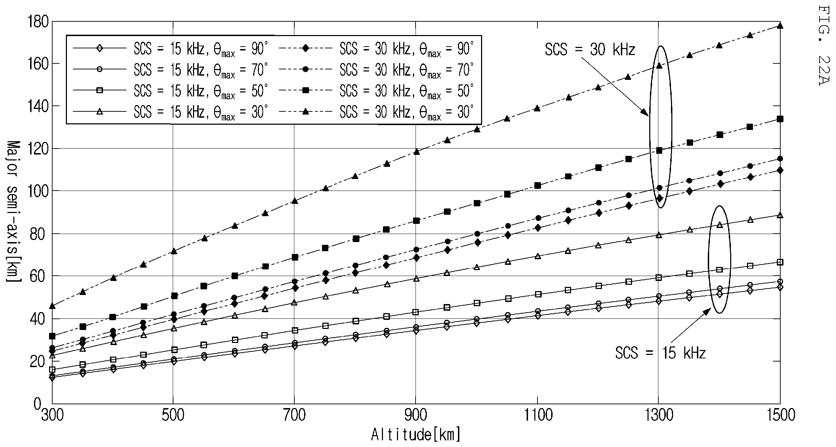

FIGS. 22a to 22c illustrate simulation results for a major semi-axis of beam coverage according to satellite altitude in a communication system supporting satellite communication according to an embodiment of the present disclosure. FIGS. 22a to 22c illustrate simulation results for the major semi-axis of beam coverage according to satellite altitude in a communication system supporting satellite communication according to one embodiment of the present disclosure. The major semi-axis of beam coverage may mean an upper bound of beam size. For the simulation, the altitude was set to [300:50:1500] km, and the SCS was set to 15 kHz, 30 kHz, 60 kHz, and 120 kHz.

FIG. 22a shows the major semi-axis of beam coverage according to satellite altitude in a situation where the SCS is 15 kHz or 30 kHz. Specifically, FIG. 22a shows the major semi-axis of beam coverage considering the Doppler shift $\Delta f_D$ at each maximum elevation angle in a case where the SCS is 15 kHz or 30 kHz and the carrier frequency is 7 GHz. Referring to FIG. 22a, it can be seen that the major semi-axis of beam coverage in the case where the SCS is 30 kHz is larger than the major semi-axis of beam coverage in the case where the SCS is 15 kHz. In addition, it can be seen that for the same SCS, the smaller the maximum elevation angle, the larger the major semi-axis of beam coverage.

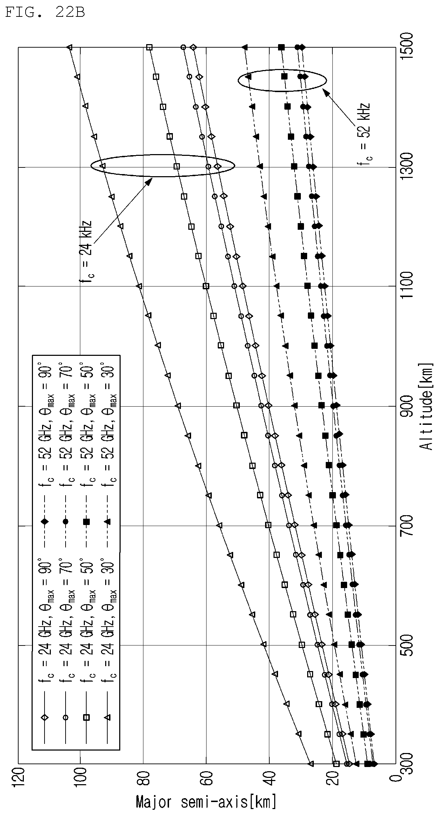

FIG. 22b shows the major semi-axis of beam coverage according to satellite altitude when SCS is 60 kHz.

Specifically, FIG. 22b shows the major semi-axis of beam coverage considering the Doppler shift $\Delta f_D$ at each maximum elevation angle when SCS is 60 kHz and the carrier frequency is 24 GHz or 52 GHz. Referring to FIG. 22b, it can be seen that the major semi-axis of beam coverage when the carrier frequency is 24 GHz is larger than the major semi-axis of beam coverage when the carrier frequency is 52 GHz. In addition, it can be seen that, for the same carrier frequency, the smaller the maximum elevation angle, the larger the major semi-axis of beam coverage.

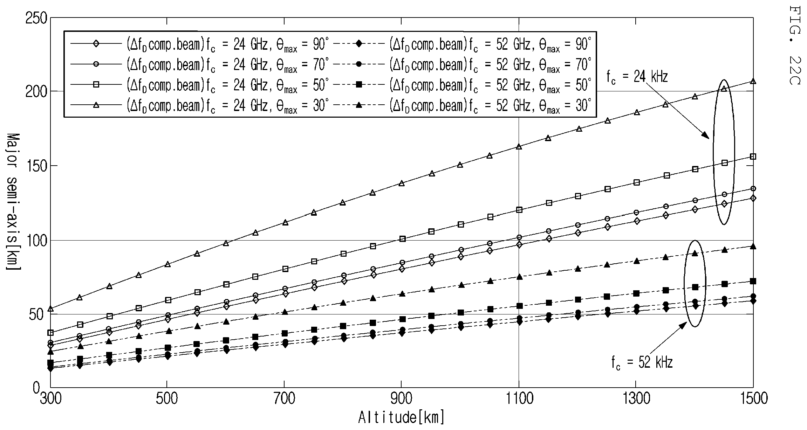

FIG. 22c shows the major semi-axis of beam coverage according to satellite altitude when the SCS is 120 kHz. Specifically, FIG. 22c shows the major semi-axis of beam coverage considering the Doppler shift $\Delta f_D$ at each maximum elevation angle when the SCS is 120 kHz and the carrier frequency is 24 GHz or 52 GHz. Referring to FIG. 22c, it can be seen that the major semi-axis of beam coverage when the carrier frequency is 24 GHz is larger than the major semi-axis of beam coverage when the carrier frequency is 52 GHz. In addition, it can be seen that, for the same carrier frequency, the smaller the maximum elevation angle, the larger the major semi-axis of beam coverage.

Referring to FIGS. 22a to 22c described above, it can be seen that the beam size considering the Doppler shift according to the embodiment of the present disclosure is proportional to the SCS and altitude, and inversely proportional to the carrier frequency and the maximum elevation angle.

According to the various embodiments described above, the terminal may determine a beam size in a situation where the SCS, the carrier frequency, the altitude, and the maximum elevation angle are given, and select a beam based on the beam size.

According to various embodiments of the present disclosure, considering the high mobility of a low orbit satellite, differential delay is additionally considered. The differential delay may be limited by at least one of a maximum random access distance $D_{RA}$ and a maximum timing advance distance $D_{TA}$.

Accordingly, according to an embodiment of the present disclosure, a method of determining the size of a beam for providing a cell of a low orbit satellite network by considering differential delay is proposed. Specifically, various embodiments for determining and controlling the size of a beam for providing a cell of a low orbit satellite network by considering differential delay, and for signaling related information will be described.

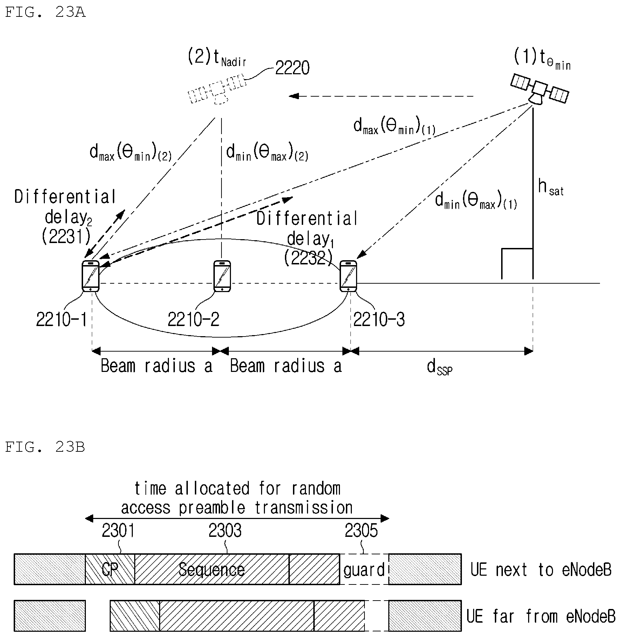

FIG. 23a illustrates a concept of differential delay in a communication system supporting satellite communication according to an embodiment of the present disclosure.

Referring to FIG. 23a, a satellite 2220 forms beam coverage on the ground, and terminals 2210-1, 2210-2 and 2210-3 are located within the beam coverage. According to an embodiment, the satellite 2220 may be a low orbit satellite, and the distance and/or elevation angle between the terminals 2210-1, 2210-2 and 2210-3 within the beam coverage and the satellite may change depending on the location of the satellite 2220. At this time, when the elevation angle with respect to the satellite at a point where the terminal is located is a maximum elevation angle $\theta_{max}$, the distance between the satellite and the terminal becomes a minimum distance $d_{min}$, and when the elevation angle with respect to the satellite at the point where the terminal is located is a minimum elevation angle $\theta_{min}$, the distance between the satellite and the terminal becomes a maximum distance $d_{max}$. The maximum elevation angle $\theta_{max}$, minimum elevation angle $\theta_{min}$, maximum distance $d_{max}$, and minimum distance $d_{min}$ may vary depending on the location of the satellite.

As illustrated in FIG. 23a, each terminal within the beam coverage may experience differential delay according to the location of the satellite. For example, a signal received by the first terminal 2210-1 at the beam coverage boundary at a first time point $t_{\theta min}$ when the satellite is located at a first location may experience first differential delay (Differential delay$_1$) 2231, and a signal received by the first terminal 2210-1 at the beam coverage boundary at a second time point $t_{Nadir}$ when the satellite is located at a second location may experience second differential delay (Differential delay$_2$) 2232. The differential delay $\Delta D$ may be expressed as a difference between the maximum distance and the minimum distance according to the location of the satellite.

According to an embodiment of the present disclosure, the differential delay $\Delta D$ is limited to have a value less than or equal to a maximum random access distance $D_{RA}$ and a maximum timing advance distance $D_{TA}$. For example, the differential delay shall be set to a value less than or equal to a smaller value of $D_{RA}$ and $D_{TA}$.

As mentioned above, the maximum random access distance $D_{RA}$ needs to be calculated for setting the differential delay. Random access is a procedure performed to prevent collision with other terminals when a terminal initially accesses a network. The maximum random access distance $D_{RA}$ may be calculated based on a cyclic prefix (CP), a random sequence, and a guard time. This is because the preamble format for random access is configured as shown in FIG. 23b.

FIG. 23a illustrates a concept of differential delay in a communication system supporting satellite communication according to an embodiment of the present disclosure. FIG. 23b illustrates a format of a random access preamble in a communication system supporting satellite communication according to an embodiment of the present disclosure.

Referring to FIGS. 23a and 23b, the random access preamble may include a cyclic prefix (CP) 2301, a random sequence 2303, and a guard time 2305. The guard time 2305 is set to allow for timing uncertainty due to the distance between the terminal and the base station (satellite).

In the present disclosure, the maximum random access distance $D_{RA}$ may be calculated as shown in Equation 1 below.

【Equation 1】

$$D_{RA}(\mu) = C\frac{T_{GT}}{2} = C\frac{N_{slot}(\mu)T_{slot}(\mu) - T_{CP} - T_{SEQ}}{2}$$

In [Equation 1], $D_{RA}(\mu)$ denotes a maximum random access distance, c denotes the speed of light, $T_{GT}$ denotes a guard time, $N_{slot}$ denotes the number of time slots of a preamble, and $T_{slot}$ denotes the length of the time slot. In addition, $T_{CP}$ denotes the length of CP, and $T_{SEQ}$ denotes the length of the random sequence. Specifically, $T_{CP}$ may be $N_{CP}.k.2^{-\mu}$ (k=64.0.509.10$^{-6}$[ms]), and $T_{SEQ}$ may be $N_{rep}.2048.k.2^{-\mu}$. $N_{rep}$ denotes the number of sequence repetitions. In addition, $T_{slot}$ is $2^{-\mu}$[ms] ($\mu$=0, 1, 2, 3). That is, $T_{slot}$ may be 1 ms, 0.5 ms, 0.25 ms, or 0.125 ms, and SCS may be 15 kHz, 30 kHz, 60 kHz, or 120 kHz. In addition, $N_{slot}$ may be calculated as $N_{slot}(\mu) = [(T_{CP} + T_{SEQ})/T_{slot}(\mu)]$. In addition, $T_{GT}$ may be expressed as $T_{GT} = Ns_{lot}(\mu)T_{slot}(\mu) - T_{CP} - T_{SEQ}$. The denominator of [Equation 1] is 2 to consider round-trip delay.

The preamble format is divided into a long preamble and a short preamble. [Table 5] and [Table 6] show PRACH short preamble formats for FR1 and FR2.

[Table 5]

| Format | Number of Repetitions | CP Length ($\mu$s) | Preamble Length($\mu$s) Excluding CP |
|---|---|---|---|
| A1 | 2 | 9.4 | 133 |
| A2 | 4 | 18.7 | 267 |
| A3 | 6 | 28.1 | 400 |
| B1 | 2 | 7.0 | 133 |
| B2 | 4 | 11.7 | 267 |
| B3 | 6 | 16.4 | 400 |
| B4 | 12 | 30.5 | 800 |
| C0 | 1 | 40.4 | 66.7 |
| C2 | 4 | 66.7 | 267 |

[Table 5] shows the number of sequence repetitions $N_{rep}$, CP length, and preamble length for each PRACH short preamble format.

[Table 6]

| Format | $L_{RA}$ | $\Delta f^{RA}$ | $N_\mu$ | $N_{CP}^{RA}$ | Support for restricted sets |
|---|---|---|---|---|---|
| A1 | 139 | 15 ·2$^\mu$ kHz | 2 ·2048k ·2$^{-\mu}$ | 288k ·2$^{-\mu}$ | - |
| A2 | 139 | 15 ·2$^\mu$ kHz | 4 ·2048k ·2$^{-\mu}$ | 576k ·2$^{-\mu}$ | - |
| A3 | 139 | 15 ·2$^\mu$ kHz | 6 ·2048k ·2$^{-\mu}$ | 864k ·2$^{-\mu}$ | - |
| B1 | 139 | 15 ·2$^\mu$ kHz | 2 ·2048k ·2$^{-\mu}$ | 216k ·2$^{-\mu}$ | - |
| B2 | 139 | 15 ·2$^\mu$ kHz | 4 ·2048k ·2$^{-\mu}$ | 360k·2$^{-\mu}$ | - |
| B3 | 139 | 15 ·2$^\mu$ kHz | 6 ·2048k ·2$^{-\mu}$ | 504k ·2$^{-\mu}$ | - |
| B4 | 139 | 15 ·2$^\mu$ kHz | 12 ·2048k ·2$^{-\mu}$ | 936k ·2$^{-\mu}$ | - |
| C0 | 139 | 15 ·2$^\mu$ kHz | 2048k ·2$^{-\mu}$ | 1024k ·2$^{-\mu}$ | - |
| C2 | 139 | 15 ·2$^\mu$ kHz | 4 ·2048k ·2$^{-\mu}$ | 2048k ·2$^{-\mu}$ | - |

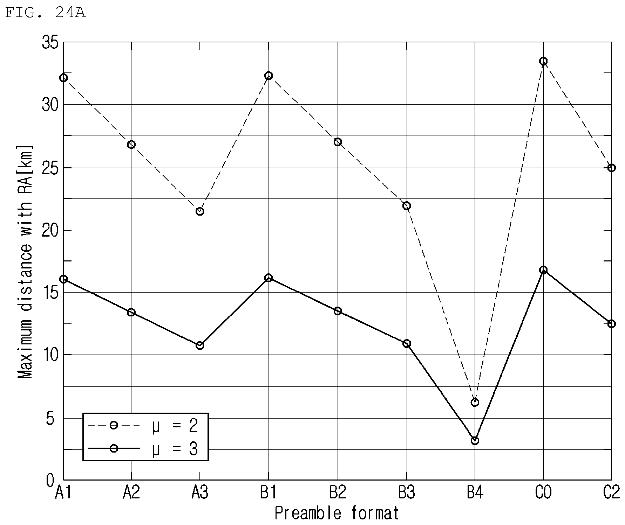

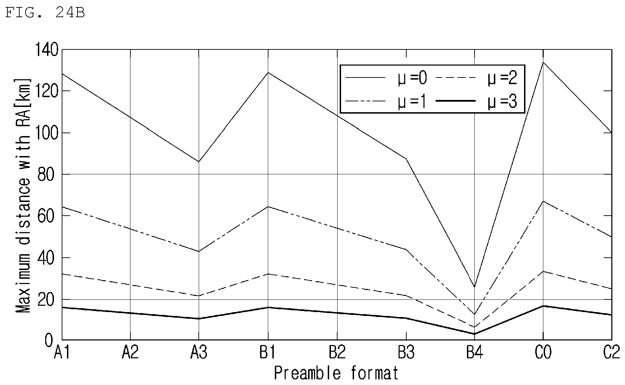

[Table 6] shows a sequence length $L_{RA}$, subcarrier spacing $\Delta f^{RA}$, random sequence length $N_\mu$ (or $T_{SEQ}$), and CP length $N_{CP}^{RA}$ for each preamble format. Here, $N_{CP}^{RA}$ may be the same as $T_{CP}$ in [Equation 1] . Here, the sequence length $L_{RA}$ being 139 means that it is a short sequence. FIG. 24a and FIG. 24b illustrate maximum random access distances for each preamble format in a communication system supporting satellite communication according to an embodiment of the present disclosure. Referring to FIG. 24a and FIG. 24b, the maximum random access distance $D_{RA}$ always has a minimum value when the preamble format is B4 regardless of the OFDM numerology, and has a maximum value when the preamble format is C0. This may also be seen from Table 6 that when the preamble format is B4, the number of sequence repetitions is 12, and when the preamble format is C0, the number of sequence repetitions is 1.

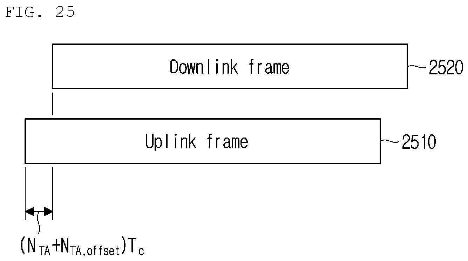

According to an embodiment of the present disclosure, a maximum timing advance distance $D_{TA}$ needs to be calculated for setting differential delay. Timing advance is a procedure performed to prevent interference between uplink and downlink. The maximum timing advance distance $D_{TA}$ may be calculated based on the uplink and downlink timing relationships. FIG. 25 illustrates uplink and downlink timing relationships in a wireless communication system. FIG. 25 illustrates uplink and downlink timing relationships in a wireless communication system. Referring to FIG. 25, a time interval $T_{TA}$ between an uplink frame 2510 and a downlink frame 2520 may be determined by a measurement value $N_{TA}$ transmitted to a terminal through a timing advance command, a fixed value $N_{TA,offset}$ that varies depending on FR and SCS, and a basic time unit Tc of the 5G NR system. Therefore, the maximum timing advance distance $D_{TA}$ may be calculated as in [Equation 2] below.

$$【Equation\ 2】$$

$$T_{TA}(\mu) = (N_{TA}(\mu) + N_{TA,offset})T_C$$

In [Equation 2], c represents the speed of light. In addition, $N_{TA,offset}$ is a fixed value that varies depending on FR and SCS as described above, and may use the values defined in NR standard document TS 38.133 v15.6. In addition, $N_{TA}$ is a measurement value transmitted to the terminal through the timing advance command, and may be expressed as $N_{TA}(\mu) = T_A \cdot (16 \cdot 64)2^{-\mu}$. Here, $T_A = 0, 1, 2, ... , 3846$.

As described above, the differential delay $\Delta D$ may be limited by the smaller value of the maximum random access distance $D_{RA}$ and the maximum timing advance distance $D_{TA}$. Below, [Table 7] shows the maximum random access distance $D_{RA}$, and [Table 8] shows the maximum timing advance distance $D_{TA}$.

[Table 7]

|  | μ=0 (15kHz) | μ=1 (30kHz) | μ=2 (60kHz) | μ=3(120kHz) |
|---|---|---|---|---|
| $D_{RA}$ (km) | 133.84 | 66.92 | 33.46 | 16.73 |

[Table 7] shows the maximum random access distance when the preamble format is C0.

[Table 8]

|  | μ=0 (15kHz) | μ=1 (30kHz) | μ=2 (60kHz) | μ=3(120kHz) |
|---|---|---|---|---|
| $D_{TA}$ (km) | 603.48 | 302.79 | 152.45 | 77.27 |

[Table 8] shows the maximum timing advance distance when $T_A$ is 3846 and $N_{TA,offset}$ is 25,600 (FR1) or 13, 795 (FR2). Referring to [Table 7] and [Table 8], it can be seen that the maximum random access distance is smaller than the maximum timing advance distance. This indicates that the maximum random access distance $D_{RA}$ is a dominant parameter that has a greater effect on the differential delay than the maximum timing advance distance $D_{TA}$. However, this may be limited to the case where $T_A$ is greater than 146.

Therefore, the differential delay according to the embodiment of the present disclosure may be expressed as in Equation 3 below.

$$【Equation\ 3】$$

$$\Delta D = d_{max}(\theta_{min}) - d_{min}(\theta_{max}) \leq D_{RA}$$

[Equation 3] may be organized as [Equation 4] below.

【Equation 4】

$$d_{\min}(\theta_{\max}) \geq d_{\max}(\theta_{\min}) - D_{RA} = d_{\min,t}$$

[In Equation 4], $d_{\min,t}$ represents the minimum value of $d_{\min}(\theta_{\max})$ .

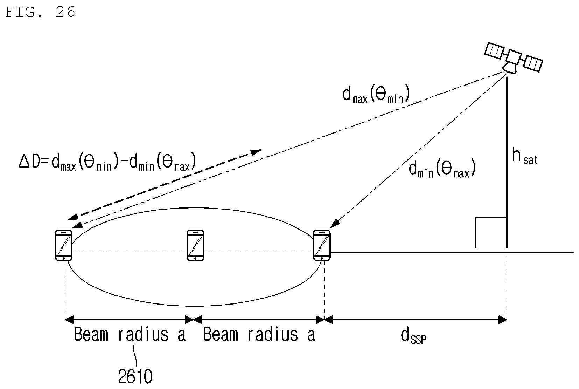

Assuming that the beam radius according to the beam size of the satellite according to one embodiment of the present disclosure is a 2610 as illustrated in FIG. 26, the beam radius may be calculated using Equations 5 to 7 below. FIG. 26 illustrates a beam radius of a satellite in a wireless communication system according to an embodiment of the present disclosure.

First, the maximum distance $d_{\min}(\theta_{\max})$ between the terminal and the base station corresponding to the case where the elevation angle between the satellite and the terminal is minimum may be calculated as in Equation 5 below.

【Equation 5】

$$d_{\max}(\theta_{\min}) = R_E \left[ \sqrt{ \left( \frac{R_E + h_{sat}}{R_E} \right)^2 - \cos^2\theta_{\min} } - \sin\theta_{\min} \right]$$

In [Equation 5], $R_E$ means the radius of the Earth, and $h_{sat}$ means the altitude of the satellite.

At this time, the diameter 2a, which represents the beam size of the satellite, may be calculated as in Equation 6 below.

【Equation 6】

$$2a = d_{\max}(\theta_{\min})\cos\theta_{\min} - d_{ssp}$$

In [Equation 6], $d_{ssp}$ means a distance between a sub-satellite point and a terminal closest to the satellite. The sub-satellite point means the position where the elevation angle from the ground to the satellite is a right angle.

According to [Equation 5] and [Equation 6] described above, the radius of the beam may be calculated as in [Equation 7] below.

【Equation 7】

$$\alpha = \frac{d_{\max}(\theta_{\min})\cos\theta_{\min} - \sqrt{d^2_{\min,t} - h^2_{sat}}}{2}$$

Referring to [Equation 7], the beam size may be determined based on the maximum distance $d_{\max}(\theta_{\min})$ between the terminal and the base station, the minimum value $d_{\min,t}$ of $d_{\min}(\theta_{\max})$, and the altitude $h_{sat}$ of the satellite corresponding to the case where the elevation angle between the satellite and the terminal is minimum.

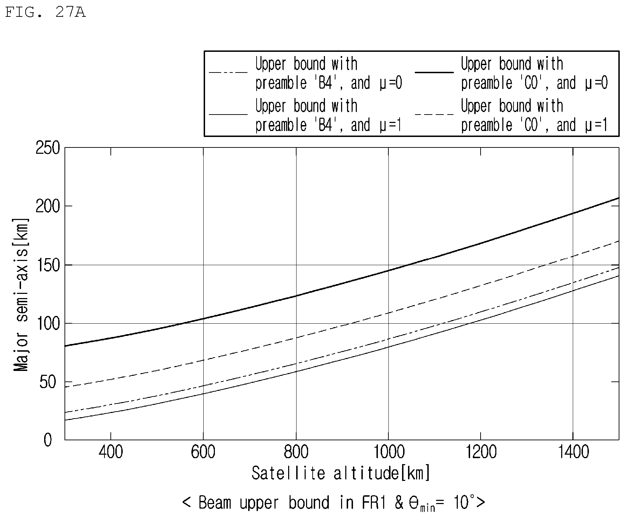

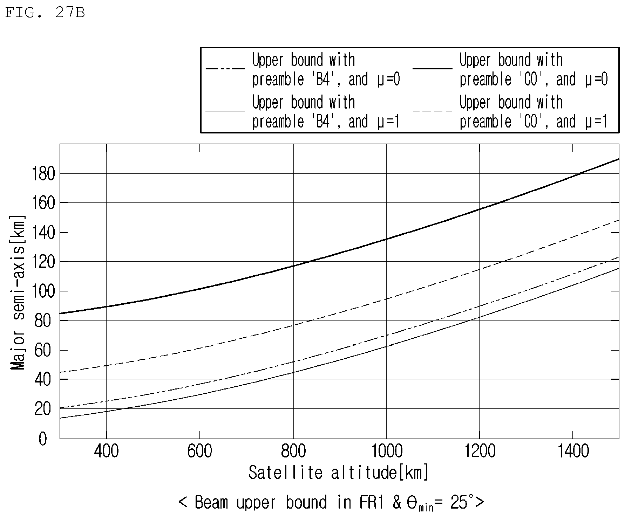

FIG. 27a and FIG. 27b illustrate simulation results for beam size according to satellite altitude in a communication system supporting satellite communication according to an embodiment of the present disclosure.

FIGS. 27a and 27b are simulation results for determining the beam size for each satellite altitude using the maximum random access distance $D_{RA}$ in FR1. In particular, FIG. 27a is a simulation result for the case where the minimum elevation angle $\theta_{\min}$ is 10°, and FIG. 27b is a simulation result for the case where the minimum elevation angle is 25°. Here, the beam size when the preamble format is C0 may mean the maximum upper bound for the beam size, and the beam size when the preamble format is B4 may mean the minimum upper bound for the beam size.

Referring to FIGS. 27a and 27b, it can be seen that the upper bound of the beam size when the minimum elevation angle is 25° is lower than the upper bound of the beam size when the minimum elevation angle is 10°. That is, the simulation results of FIGS. 27a and 27b show that the higher the minimum elevation angle, the lower the upper bound.

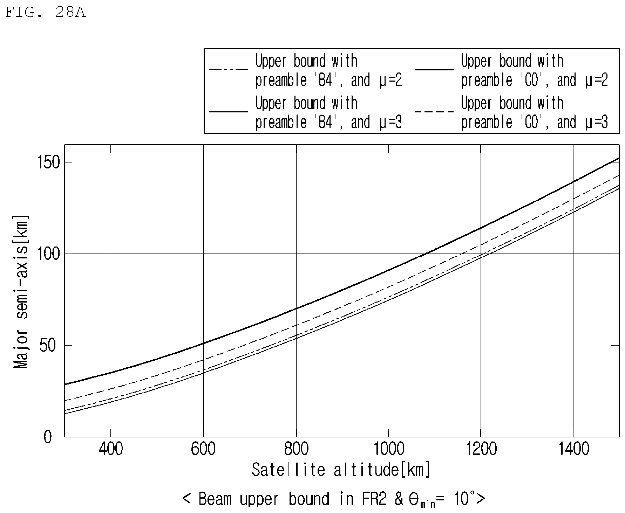

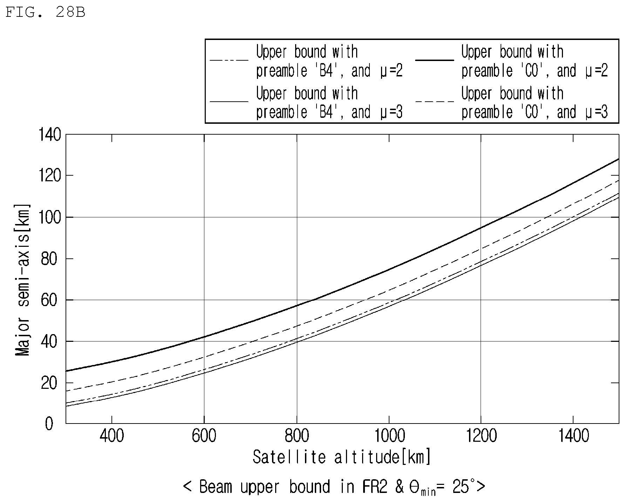

FIG. 28a and FIG. 28b illustrate simulation results for beam size according to satellite altitude in a communication system supporting satellite communication according to an embodiment of the present disclosure.

FIGS. 28a and 28b are simulation results for determining the beam size for each satellite altitude using the maximum random access distance $D_{RA}$ in FR2. In particular, FIG. 28a is a simulation result for the case where the minimum

elevation angle $\theta_{min}$ is 10°, and FIG. 28b is a simulation result for the case where the minimum elevation angle is 25°. Here, when the preamble format is C0, the beam size may mean the maximum upper bound for the beam size, and when the preamble format is B4, the beam size may mean the minimum upper bound for the beam size.

Referring to FIGS. 28a and 28b, it can be seen that the maximum upper bound of the beam size when the minimum elevation angle is 25° is lower than the maximum upper bound of the beam size when the minimum elevation angle is 10°. It can be seen that the minimum upper bound of the beam size when the minimum elevation angle is 25° is lower than the minimum upper bound of the beam size when the minimum elevation angle is 10°. As such, according to an embodiment of the present disclosure, the upper bound of the beam size may vary depending on the minimum elevation angle of the satellite. In other words, according to an embodiment of the present disclosure, the beam size may be determined based on the minimum elevation angle of the satellite. That is, the beam coverage of the satellite may be determined based on the elevation angle (e.g., the minimum elevation angle).

As described above, it can be seen that the preamble, the SCS, the minimum elevation angle, and the altitude of the satellite affect the beam size to maintain the differential delay below a certain level. Therefore, the satellite may signal information (e.g., preamble, SCS, minimum elevation angle, and satellite altitude) that affects the beam size to a terminal that is trying to connect to the satellite or a terminal that is currently connected. This is to enable the terminal that is trying to connect to the satellite to know the beam size of the satellite. The specific formats and values of the information that affect the beam size may be variously defined, and the timing of their transmission may also be variously defined.

Based on the relationship described above, the beam size in a satellite network environment may be adaptively controlled. That is, hereinafter, a method of controlling a beam size upper bound, i.e., a maximum beam size, is proposed by combining the two approaches described above. Specifically, a method of controlling the beam size upper bound is proposed based on the beam size in terms of compensation for Doppler shift and the beam size in terms of consideration of differential delay. For example, a first beam size may be determined based on a carrier frequency, an SCS, a maximum elevation angle, and a satellite altitude, and a second beam size may be determined based on a preamble, an SCS, a minimum elevation angle, and a satellite altitude, and then the smaller beam size of the first beam size and the second beam size may be determined as a final beam size upper bound.

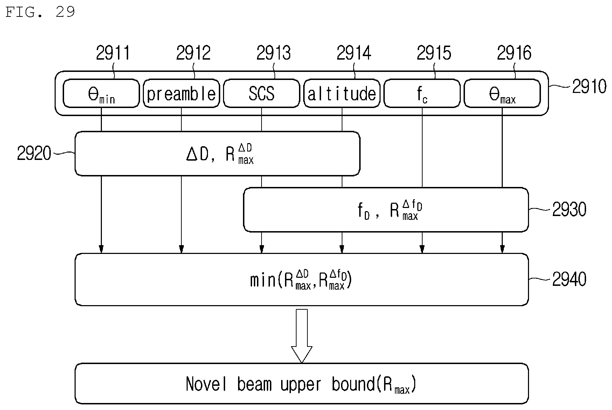

FIG. 29 is a conceptual diagram for determining a final beam size upper bound in a communication system supporting satellite communication according to an embodiment of the present disclosure.

Referring to FIG. 29, a terminal may obtain information 2910 affecting a beam size through signaling with at least one serving cell including a satellite or a base station. The information affecting the beam size may include a minimum elevation angle $\theta_{min}$ 2911, a preamble 2912, an SCS 2913, a satellite altitude 2914, a carrier frequency $f_c$ 2915, and a maximum elevation angle $\theta_{max}$ 2916.

The terminal determines a beam size upper bound $R_{max}^{\Delta D}$ 2920 considering the differential delay $\Delta D$ based on a first information set of the information 2910 affecting the beam size. The first information set may include at least one of the minimum elevation angle 2911, the preamble 2912, the SCS 2913, or the satellite altitude 2914.

In addition, the terminal determines the beam size upper bound $R_{max}^{f_D}$ 2930 considering compensation for Doppler shift $f_D$ based on a second information set of the information 2910 affecting the beam size. The second information set may include at least one of the SCS 2913, the satellite altitude 2914, the carrier frequency 2915, and the maximum elevation angle 2916.

The terminal determines the minimum value 2940 among the beam size upper bound $R_{max}^{\Delta D}$ 2920 considering the differential delay $\Delta D$ and the beam size upper bound $R_{max}^{f_D}$ 2930 considering compensation for the Doppler shift $f_D$ as the final beam size upper bound.

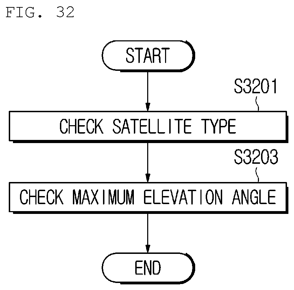

According to one embodiment, the minimum elevation angle $\theta_{min}$ 2911 may be predetermined. For example, the minimum elevation angle $\theta_{min}$ 2911 may be predetermined to be 10°, or may be predetermined to be 25°. This is merely an example to help understanding, and the embodiments of the present disclosure are not limited thereto. For example, the minimum elevation angle may be predetermined to be another value. In addition, the maximum elevation angle $\theta_{max}$ may be obtained from the SIB. For example, the maximum elevation angle $\theta_{max}$ may be obtained through the SIB as shown in FIG. 32.

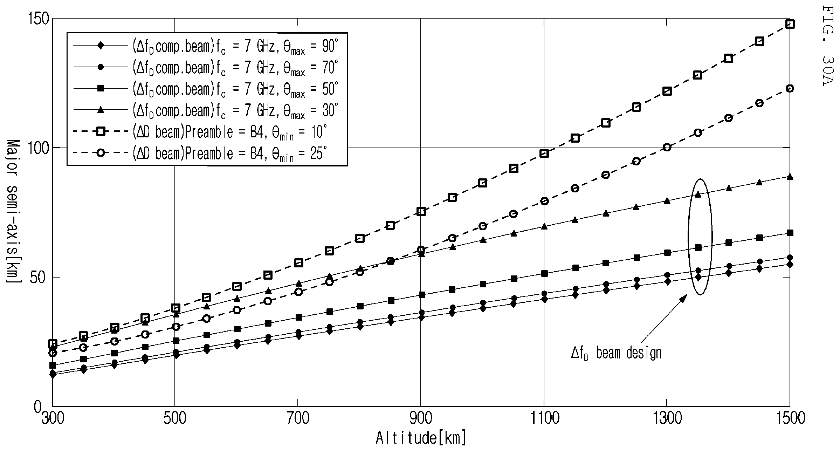

FIGS. 30a to 30d illustrate simulation results for a major semi-axis of beam coverage according to satellite altitude in a communication system supporting satellite communication according to an embodiment of the present disclosure. The major semi-axis of the beam coverage may mean a beam size upper bound. For the simulations, the minimum elevation angle was set to 10° or 25° (SpaceX (STARLINK)), and the SCS used 15 kHz ($\mu$=0) and 30 kHz ($\mu$=1) for FR1, and used 60 kHz ($\mu$=2) and 120 kHz ($\mu$=3) for FR2.

FIG. 30a shows the major semi-axis of beam coverage according to satellite altitude in a situation where the SCS is 15 kHz. Specifically, FIG. 30a shows the major semi-axis of beam coverage considering differential delay $\Delta D$ according

to minimum elevation angle when the preamble format is B4, and the major semi-axis of beam coverage considering Doppler shift $\Delta f_D$ according to maximum elevation angle when the carrier frequency $f_c$ is 7 GHz.

Referring to FIG. 30a, it can be seen that when the minimum elevation angle is 10°, the major semi-axis of the beam coverage considering the Doppler shift $\Delta f_D$ is designed as the final beam size regardless of the maximum elevation angle. In addition, it can be seen that when the minimum elevation angle is 25° and the maximum elevation angle is 50°, 70°, or 90°, the major semi-axis of the beam coverage considering the Doppler shift $\Delta f_D$ is designed as the final beam size. It can be seen that when the minimum elevation angle is 25° but the maximum elevation angle is 30°, the major semi-axis of the beam coverage considering the differential delay $\Delta D$ is designed as the final beam size in the section where the altitude is about 300 km to about 875 km, and the major semi-axis of the beam coverage considering the Doppler shift $\Delta f_D$ is designed as the final beam size in the section where the altitude is about 876 km to about 1500 km.

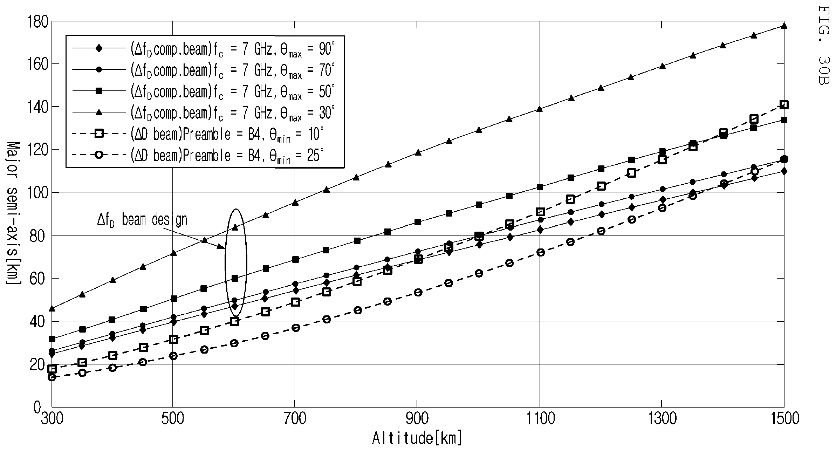

FIG. 30b shows the major semi-axis of beam coverage according to satellite altitude in a situation where the SCS is 30 kHz. Specifically, FIG. 30b shows the major semi-axis of beam coverage considering differential delay $\Delta D$ according to minimum elevation angle when the preamble format is B4, and the major semi-axis of beam coverage considering Doppler shift $\Delta f_D$ according to maximum elevation angle when the carrier frequency $f_c$ is 7 GHz.

Referring to FIG. 30b, it can be seen that when the minimum elevation angle is 10°, in some altitude sections, the major semi-axis of the beam coverage considering the differential delay $\Delta D$ is designed as the final beam size, but in other altitude sections, the major semi-axis of the beam coverage considering the Doppler shift $\Delta f_D$ is designed as the final beam size. That is, the major semi-axis of the beam coverage considering the Doppler shift $\Delta f_D$ is designed as the final beam size in the section where the altitude is about 1400 to 1500 km when the maximum elevation angle is 50°, in the section where the altitude is about 1050 to 1500 km when the maximum elevation angle is 70°, and in the section where the altitude is about 900 to 1500 km when the maximum elevation angle is 90°, and in the section where the altitude is lower than those of these sections, the major semi-axis of the beam coverage considering the differential delay $\Delta D$ may be designed as the final beam size.

In addition, when the minimum elevation angle is 25°, the major semi-axis of the beam coverage considering the Doppler shift $\Delta f_D$ may be designed as the final beam size in the section where the altitude is about 1400 to 1500 km, and the major semi-axis of the beam coverage considering the differential delay $\Delta D$ may be designed as the final beam size in the section where the altitude is lower.

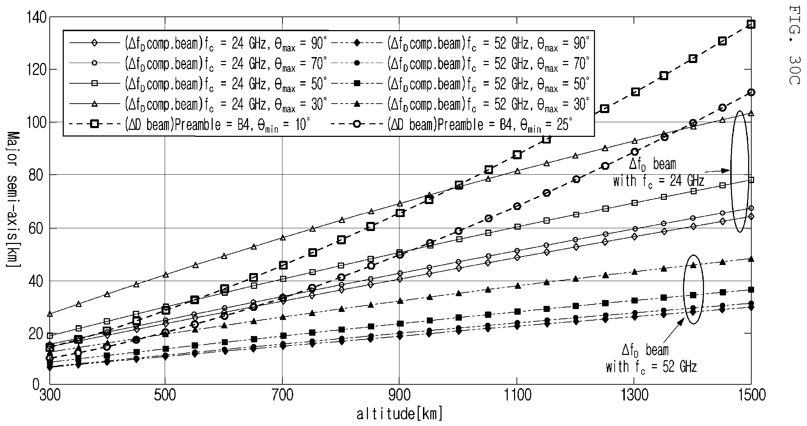

FIG. 30c shows the major semi-axis of beam coverage according to satellite altitude in a situation where the SCS is 60 kHz. Specifically, FIG. 30c shows the major semi-axis of beam coverage considering differential delay $\Delta D$ according to minimum elevation angle when the preamble format is B4, and the major semi-axis of beam coverage considering Doppler shift $\Delta f_D$ according to maximum elevation angle when the carrier frequency $f_c$ is 24 GHz or 52 GHz.

Referring to FIG. 30c, it can be seen that when the minimum elevation angle is 10° and the carrier frequency $f_c$ is 24 GHz, in some altitude sections, the major semi-axis of the beam coverage considering the differential delay $\Delta D$ is designed as the final beam size, but in other altitude sections, the major semi-axis of the beam coverage considering the Doppler shift $\Delta f_D$ is designed as the final beam size.

That is, the major semi-axis of the beam coverage considering the Doppler shift $\Delta f_D$ may be designed as the final beam size in the section where the altitude is about 1000 km or higher when the maximum elevation angle is 30°, in the section where the altitude is about 650 km or higher when the maximum elevation angle is 50°, in the section where the altitude is about 400 km when the maximum elevation angle is 70°, and in the section where the altitude is about 350 km when the maximum elevation angle is 90°, and in the section where the altitude is lower than those of these sections, the major semi-axis of the beam coverage considering the differential delay $\Delta D$ may be designed as the final beam size.

On the other hand, it can be seen that when the minimum elevation angle is 10° and the carrier frequency $f_c$ is 52 GHz, the major semi-axis of the beam coverage considering the Doppler shift $\Delta f_D$ is always designed as the final beam size regardless of the maximum elevation angle and altitude.

Also, it can be seen that when the minimum elevation angle is 25° and the carrier frequency $f_c$ is 24 GHz, in some altitude sections, the major semi-axis of the beam coverage considering the differential delay $\Delta D$ is designed as the final beam size, while in other altitude sections, the major semi-axis of the beam coverage considering the Doppler shift $\Delta f_D$ is designed as the final beam size.

That is, the major semi-axis of the beam coverage considering the Doppler shift $\Delta f_D$ may be designed as the final beam size in the section where the altitude is about 1400 km or higher when the maximum elevation angle is 30°, in the section where the altitude is about 950 km or higher when the maximum elevation angle is 50°, in the section where the altitude is about 750 km when the maximum elevation angle is 70°, and in the section where the altitude is about 700 km when the maximum elevation angle is 90°, and in the section where the altitude is lower than those of these sections, the major semi-axis of the beam coverage considering the differential delay $\Delta D$ may be designed as the final beam size.

On the other hand, it can be seen that when the minimum elevation angle is 25° and the carrier frequency $f_c$ is 52 GHz, the major semi-axis of the beam coverage considering the Doppler shift $\Delta f_D$ is designed as the final beam size regardless of the altitude in a situation where the maximum elevation angle is 50°, 70°, or 90°, and the major semi-axis of the beam coverage considering the Doppler shift $\Delta f_D$ is designed as the final beam size in the section where the altitude is about 500 km or higher in a situation where the maximum elevation angle is 30°.

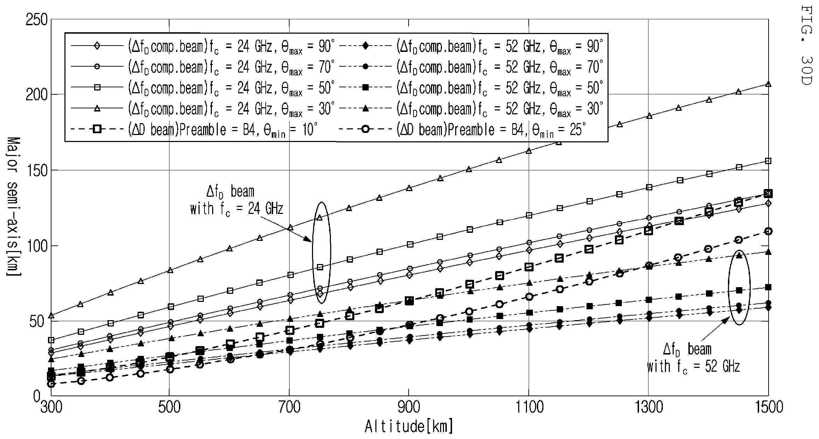

FIG. 30d shows the major semi-axis of beam coverage according to satellite altitude in the case where the SCS is 120 kHz. Specifically, FIG. 30d shows the major semi-axis of beam coverage considering the differential delay $\Delta D$ according to the minimum elevation angle when the preamble format is B4, and the major semi-axis of beam coverage considering the Doppler shift $\Delta f_D$ according to the maximum elevation angle when the carrier frequency $f_c$ is 24 GHz or 52 GHz.

Referring to FIG. 30d, it can be seen that when the minimum elevation angle is 10°, the carrier frequency $f_c$ is 52 GHz, and the maximum elevation angle is 90°, the major semi-axis of the beam coverage considering the Doppler shift $\Delta f_D$ is designed as the final beam size regardless of the altitude. On the other hand, it can be seen that when the minimum elevation angle is 10°, the carrier frequency $f_c$ is 52 GHz, and the maximum elevation angle is 30°, 50°, or 70°, the major semi-axis of the beam coverage considering the differential delay $\Delta D$ is designed as the final beam size in some altitude sections, but the major semi-axis of the beam coverage considering the Doppler shift $\Delta f_D$ is designed as the final beam size in some other altitude sections.

Specifically, the major semi-axis of the beam coverage considering the Doppler shift $\Delta f_D$ may be designed as the final beam size in the section where the altitude is about 950 km or higher when the maximum elevation angle is 30°, in the section where the altitude is about 550 km or higher when the maximum elevation angle is 50°, and in the section where the altitude is about 400 km when the maximum elevation angle is 70°, and in the section where the altitude is lower than those of these sections, the major semi-axis of the beam coverage considering the differential delay $\Delta D$ may be designed as the final beam size.

In addition, it can be seen that when the minimum elevation angle is 10°, the carrier frequency $f_c$ is 24 GHz, and the maximum elevation angle is 70° or 90, the major semi-axis of the beam coverage considering the differential delay $\Delta D$ is designed as the final beam size in some altitude sections, but the major semi-axis of the beam coverage considering the Doppler shift $\Delta f_D$ is designed as the final beam size in other altitude sections. Specifically, the major semi-axis of the beam coverage considering the Doppler shift $\Delta f_D$ may be designed as the final beam size in the section where the altitude is about 1500 km or higher when the maximum elevation angle is 70°, and in the section where the altitude is about 1500 km or higher when the maximum elevation angle is 90°, and in the section where the altitude is lower than those of these sections, the major semi-axis of the beam coverage considering the differential delay $\Delta D$ may be designed as the final beam size.

Also, it can be seen that when the minimum elevation angle is 10°, the carrier frequency $f_c$ is 24 GHz, and the maximum elevation angle is 30° or 50°, the major semi-axis of the beam coverage considering the differential delay $\Delta D$ is designed as the final beam size regardless of the altitude.

Also, it can be seen that when the minimum elevation angle is 25° and the carrier frequency $f_c$ is 52 GHz, the major semi-axis of the beam coverage considering the differential delay $\Delta D$ is designed as the final beam size in some altitude sections according to the maximum elevation angle, but the major semi-axis of the beam coverage considering the Doppler shift $\Delta f_D$ is designed as the final beam size in other altitude sections.

Specifically, the major semi-axis of the beam coverage considering the Doppler shift $\Delta f_D$ may be designed as the final beam size in the section where the altitude is about 1300 km or higher when the maximum elevation angle is 30°, in the section where the altitude is about 900 km or higher when the maximum elevation angle is 50°, in the section where the altitude is about 700 km or higher when the maximum elevation angle is 70°, and in the section where the altitude is about 650 km or higher when the maximum elevation angle is 90°, and the major semi-axis of the beam coverage considering the differential delay $\Delta D$ may be designed as the final beam size in the section whether the altitude is lower than those of these sections.

As described above, according to the embodiment of the present disclosure, the final beam size (or coverage size) of the satellite is determined based on at least one of the minimum elevation angle, the preamble format, the SCS, the altitude, the carrier frequency, or the maximum elevation angle, and may be limited by a beam size considering differential delay or a beam size upper bound considering compensation for Doppler shift. Accordingly, the terminal may determine whether the terminal is located within the effective coverage area based on the beam size upper bound, and determine whether to use the corresponding beam as a serving beam. That is, the terminal may perform beam selection. Specific embodiments for beam selection are as follows.

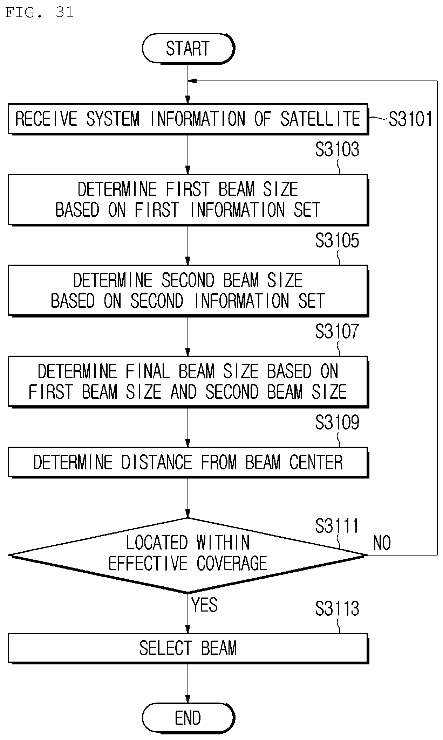

FIG. 31 illustrates an example of a procedure for selecting a beam according to an embodiment of the present disclosure. FIG. 31 illustrates a method of operating a terminal.

Referring to FIG. 31, in step S3101, the terminal receives system information of a satellite. Here, the satellite operates as a base station, and the system information includes a MIB included in an SSB and at least one SIB received through a PDSCH (physical downlink shared channel). Specifically, the terminal may detect a synchronization signal through a cell search operation, receive and decode a MIB included in an SSB including the synchronization signal, and receive and decode at least one SIB using information acquired through the MIB. At this time, the synchronization signal, the MIB, and the SIB may be transmitted through any one of a plurality of beams used by the satellite, and a beam forwarding the synchronization signal, the MIB, and the SIB received by the terminal is treated as a candidate beam for subsequent operations.

According to one embodiment, the SIB received by the terminal may be the SIB related to the satellite. The SIB related to the satellite may include at least one of information about a measurement for the satellite, information about an NTN connection, information about an orbit of the satellite, information about a TA, information about synchronization, information about an NTN neighboring cell, information about a reference location, information about a center location of a beam, or information about a maximum elevation angle. By receiving the system information, the terminal may obtain information necessary for subsequent operations.

For example, the terminal may obtain at least one of information affecting the beam size of the satellite through the system information, that is, a minimum elevation angle, preamble information, SCS, an altitude of a satellite, a carrier frequency, or a maximum elevation angle. Here, the preamble information may include random access preamble related information necessary for calculating a maximum random access distance as in Equation 1. For example, the preamble information may include at least one of the number of time slots of a random access preamble, a time slot length, a CP length, the number of sequence repetitions, or a random sequence length.

In step S3103, the terminal determines a first beam size based on a first information set. The first information set may include some of the information affecting the beam size illustrated in FIG. 29. Specifically, the first information set may include at least one of a minimum elevation angle $\theta_{min}$, preamble information, SCS, or an altitude of a satellite. For example, the terminal may obtain the first information set through system information, and determine the first beam size considering differential delay based on the first information set. The first beam size considering the differential delay may be determined as described in Equations 1 to 7.

In step S3105, the terminal determines a second beam size based on a second information set. The second information set may include some of the information affecting the beam size illustrated in FIG. 29. Specifically, the second information set may include at least one of SCS, an altitude of a satellite, a carrier frequency $f_c$, and a maximum elevation angle $\theta_{max}$. For example, the terminal may obtain the second information set through the system information, and determine the second beam size considering compensation for the Doppler shift based on the second information set. For example, the terminal may determine the second beam size considering compensation for the Doppler shift in the same manner as described in S1803 of FIG. 18.

In step S3107, the terminal determines a final beam size based on the first beam size and the second beam size. Specifically, the terminal may determine the smaller beam size between the first beam size and the second beam size as the final beam size. The final beam size may mean the effective coverage size of the beam that forwarded the system information to the terminal.

In step S3109, the terminal determines a distance from the center of the beam. In other words, the terminal checks how far the terminal is from the center of the beam. To this end, the terminal may use the location information of the terminal. That is, the terminal may obtain the location information of the terminal, check the center location of the candidate beam, and then determine the distance between the location of the terminal and the center location of the beam. Here, the center location of the beam may be checked in various ways. According to one embodiment, the center location of the beam may be checked based on a previously known orbit of the satellite and identification information of the satellite. According to another embodiment, the center location of the beam may be explicitly or implicitly signaled via system information. For example, the center location of the beam may be checked from an SIB as shown in Table 5 or Table 10.

In step S3111, the terminal determines whether the terminal is located within the effective coverage of the beam. To this end, the terminal compares the final beam size determined in step S3107 and the distance from the beam center determined in step S3109. That is, if the distance from the beam center is less than or equal to the radius of coverage according to the final beam size, the terminal may determine that the terminal is located within the effective coverage of the beam.

If the terminal is located within the effective coverage of the beam, the terminal selects the beam in step S3113. In other words, the terminal selects the beam that forwarded the system information to be used as a serving beam. That is, the terminal may decide to perform a subsequent random access operation using the corresponding beam. On the other hand, if the terminal is not located within the effective coverage of the beam, the terminal returns to step S3101. Accordingly, the terminal may search for another beam of the corresponding satellite or another satellite, and repeat the above-described operations for the searched other beam.

According to the embodiment described with reference to FIG. 31, the terminal may select the serving beam. To this end, the terminal uses the center location of the candidate beam currently observed. As described above, the center location of the beam may be checked in various ways. For example, the center location of the beam may be checked based on an area in which the terminal is currently located. When the arrangement of the satellite base stations is determined, the center locations of the beams transmitted by the corresponding satellite base stations may be fixedly determined. In other words, if the satellite base stations are arranged on the ground, the center locations of the beams transmitted from the satellite may be fixedly determined by utilizing the satellite base stations. Since the beam coverage of the satellite base station is larger than that of the ground base station, the correspondence between the area and the center location of the beam may be derived. In this case, the correspondence between the area and the center location of the beam may be defined in advance, and the terminal may check the center location of the beam from the area in which it is currently located

by using the information on the correspondence. According to one embodiment, the terminal may obtain the center location information of the beam through the system information.

In FIG. 31, it is described that the terminal acquires at least one of information affecting the beam size through system information, for example, minimum elevation angle, preamble information, SCS, satellite altitude, carrier frequency, and maximum elevation angle. According to one embodiment, at least one of the information affecting the beam size may be acquired in the manner described in FIGS. 19 to 21. For example, the terminal may acquire the system information through the MIB, transmit a request for the SIB, and then receive the SIB, as described in FIG. 19. In addition, the terminal may acquire SCS, as described in FIG. 20, and acquire beam center location information, as described in FIG. 21.

According to one embodiment, at least one of the information affecting the beam size may be predetermined. For example, the minimum elevation angle $\theta_{min}$ may be predetermined. For example, the minimum elevation angle $\theta_{min}$ may be predetermined for each satellite type. For example, the minimum elevation angle may be predetermined to be about 10° or about 25°. This is only an example to help understanding, and the minimum elevation angle may be set to another value. In addition, the terminal may obtain the maximum elevation angle $\theta_{max}$ through the SIB.

FIG. 32 illustrates an example of a procedure for obtaining a minimum elevation angle according to an embodiment of the present disclosure. FIG. 32 illustrates a method of operating a terminal.

Referring to FIG. 32, in step S3201, the terminal may check a type of a satellite. The type of the satellite may be obtained, for example, from system information of the satellite. For example, the terminal may receive system information including an SIB from a satellite operating as a base station, and the system information may include satellite type information. This is only an example, and the method of checking the satellite type information is not limited thereto.

In step S3203, the terminal may check a minimum elevation angle. That is, the terminal may determine the minimum elevation angle based on the type of the satellite. For example, the terminal may check the minimum elevation angle corresponding to the checked satellite type based on information about the minimum elevation angle for each type of satellite that is stored in advance. For example, if the satellite type is a first type, the terminal may check that the minimum elevation angle is 10°. Additionally, if the satellite type is a second type, the terminal may check that the minimum elevation angle is 25°.

The procedure for obtaining the minimum elevation angle described above is only an example, and the embodiments of the present disclosure are not necessarily limited thereto. For example, the embodiments of the present disclosure may be equally applied even when the minimum elevation angle is determined in a different manner. Alternatively, according to another embodiment, the minimum elevation angle may be defined regardless of the type of satellite.

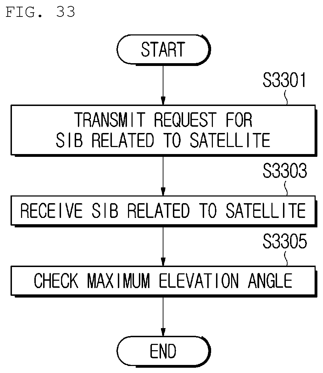

FIG. 33 illustrates an example of a procedure for obtaining a maximum elevation angle according to an embodiment of the present disclosure. FIG. 33 illustrates a method of operating a terminal.

Referring to FIG. 33, in step S3301, the terminal transmits a request for an SIB related to a satellite. The terminal may request an SIB related to a satellite by transmitting a random access preamble. For example, the SIB related to the satellite may be an SIB including satellite assistance information for NTN connection. Here, the SIB related to the satellite is transmitted in an on-demand manner, and the on-demand manner may mean a method of requesting transmission of the corresponding SIB to the satellite and receiving it.

In step S3303, the terminal receives the SIB related to the satellite. For example, the terminal may receive the SIB related to the satellite through a resource indicated by an RAR transmitted in response to a random access preamble for requesting system information. As another example, the terminal may transmit a message requesting the SIB through a resource indicated by an RAR transmitted in response to the random access preamble, and then receive the SIB related to the satellite. The SIB related to the satellite may include at least one of information about a measurement for the satellite, information about an NTN connection, information about an orbit of the satellite, information about a TA, information about synchronization, information about an NTN neighboring cell, information about a reference location, or information about a center location of a beam. In particular, according to one embodiment, the SIB related to the satellite may include information about a maximum elevation angle. Here, the maximum elevation angle may mean a maximum elevation angle of an earth-fixed beam with respect to a reference location included in the SIB.

In step S3305, the terminal checks information about the maximum elevation angle. That is, the terminal may check the maximum elevation angle with respect to the reference location by interpreting information about the maximum elevation angle included in the received SIB.

As in the embodiment described with reference to FIG. 33, the terminal may check the maximum elevation angle through the SIB. That is, the SIB includes information on the maximum elevation angle. For example, the SIB related to the satellite may include at least one of ephemeris data, common TA parameters, HARQ-related offsets (e.g., k_offset), validity duration for uplink synchronization information, or epoch information as parameters required for the terminal to access NR through the NTN connection (e.g., ntn-Config). In addition, the SIB related to the satellite may include time information (e.g., t-Service) on the point in time when a cell provided through the NTN quasi-earth fixed system stops providing service for an area currently covered by the satellite. In addition, the SIB related to the satellite may include information on a reference location of a serving cell provided through the NTN quasi-earth fixed system (e.g., referenceLocation), which may be used for initiation of location-based measurement. In addition, the SIB related to the satellite may include information used for initiating location-based measurement, as distance information from a serving cell reference location (e.g., distanceThresh). In addition, the SIB related to the satellite may include information providing a list of NTN neighboring cells (e.g., ntn-NeighCellConfigList, lateNonCriticalExtension), and information about each satellite included in the list may include ntn-Config, a carrier frequency, and a cell identifier (e.g., PhysCellId). In addition, the SIB related to the satellite may include information about the center location of a cell provided by the satellite (e.g., centerOfCoverage). In addition, the SIB related to the satellite may include information about the maximum elevation angle of the satellite (e.g., maximumElevationAngle). In addition, although in the above-described embodiment, the SIB related to the satellite is described as being transmitted in an on-demand manner, according to another embodiment of the present disclosure, the SIB related to the satellite may be defined to be transmitted without a request. In this case, in the procedure illustrated in FIG. 33, step S3301 is omitted, and the terminal may receive the SIB related to the satellite without a separate request. At this time, the terminal may check scheduling information for the SIB related to the satellite, and then receive the SIB related to the satellite based on the checked scheduling information.

According to various embodiments described above, a serving beam for communication with a satellite may be selected based on a beam size. In the embodiments described above, it has been described that both the information necessary for determining the beam size and the information necessary for determining the center location of the beam are received from a satellite base station. However, according to other embodiments, at least a portion of the information may be provided by a ground base station. In this case, specific embodiments of which parameters are provided by the ground base station may vary depending on various embodiments or scenarios.

Meanwhile, a person having ordinary skill in the art related to the present embodiment will understand that the above-described description can be implemented in a modified form without departing from the essential characteristics thereof. Therefore, the disclosed methods should be considered from an illustrative rather than a restrictive perspective. The scope of the invention should be determined by the appended claims, not by the above description, and all differences within the equivalent scope should be interpreted as being included in the present disclosure.

**Claims**

1.   A method of performing beam selection of a terminal in a communication system supporting satellite communication, the method comprising:

   receiving first information about an elevation angle for supporting the satellite communication and second information about a center of a beam;
   determining coverage of the beam based on the first information and the second information;
   determining a distance between the terminal and the center of the beam based on the second information; and
   selecting a serving beam for the terminal based on the coverage of the beam and the distance.

2.   The method of claim 1,

   wherein the first information and the second information are received through system information, and
   wherein the system information further includes at least one of a carrier frequency, a subcarrier spacing, a minimal elevation angle, a maximum elevation angle, preamble information, an altitude of the satellite or a center location of the beam to support satellite communication for the terminal.

3.   The method of claim 2,

   wherein the second information includes information about the center location of a beam transmitted by the satellite,
   wherein the first information has different values depending on movement of the satellite, and
   wherein the serving beam is determined by considering coverage of a beam having different sizes depending on the elevation angle.

4.   The method of claim 2,

   wherein each of the carrier frequency and the subcarrier spacing varies according to a frequency range (FR) set for the terminal,
   wherein the subcarrier spacing supported in FR1 is 15, 30 or 60 kHz,

wherein the subcarrier spacing supported in FR2 is 60 kHz or 120 kHz, and

wherein the serving beam is determined by considering coverage of a beam having different sizes depending on the frequency range set for the terminal.

5. The method of claim 2,

wherein the coverage of the beam varies depending on the subcarrier spacing set for the terminal, a frequency range and an elevation angle due to movement of the satellite,

wherein the coverage of the beam changes to 1/2 as the subcarrier spacing increases from N to 2N,

wherein the coverage of the beam changes to 1/5 size as the frequency range increases from M to 2M, and

wherein the serving beam is selected by considering an elevation angle due to movement of the satellite.

6. The method of claim 1, wherein the coverage of the beam is determined based on variation characteristics of a residual Doppler value remaining after compensation based on the center of the beam, according to a distance from the center of the beam.

7. The method of claim 1, wherein the determining a size of the coverage of the beam comprises:

determining a maximum residual Doppler value based on an orbit or altitude of the satellite and a carrier frequency of a signal transmitted through the beam; and

determining the size of the coverage based on the maximum residual Doppler value and the subcarrier spacing of the signal.

8. The method of claim 7, further comprising:

checking a parameter indicating the subcarrier spacing included in a master information block (MIB) transmitted by the satellite; and

checking the subcarrier spacing based on the parameter.

9. The method of claim 8, wherein the checking the subcarrier spacing comprises interpreting the parameter based on a frequency range (FR) to which a frequency at which the parameter indicating the subcarrier spacing is received belongs.

10. The method of claim 7, further comprising checking a parameter indicating the carrier frequency included in system information related to the satellite.

11. The method of claim 1, further comprising estimating a location of the center of the beam or a distance between the terminal and the center of the beam based on information obtained through system information.

12. The method of claim 1, further comprising checking information about a location of the center of the beam included in a system information block (SIB) including assistance information for NTN connection.

13. The method of claim 1, wherein the selecting the serving beam comprises selecting a beam that forwarded the first information and the second information as the serving beam, when the distance is less than or equal to a size of the coverage.

14. The method of claim 1, wherein the determining the coverage of the beam comprises:

determining a first beam size considering differential delay based on a first information set obtained based on system information;

determining a second beam size considering compensation for Doppler shift based on a second information set obtained based on the system information; and

determining a size of the coverage of the beam used by the satellite based on the smaller beam size between the first beam size and the second beam size.

15. The method of claim 14,

wherein the first information set includes at least one of a minimum elevation angle, preamble information, a subcarrier spacing or an altitude of the satellite, and
wherein the second information set includes at least one of a carrier frequency of a signal transmitted through the beam, the subcarrier spacing, a maximum elevation angle or the altitude of the satellite.

16. The method of claim 14, wherein the differential delay is limited based on at least one of a maximum random access distance or a maximum timing advance distance.

17. The method of claim 14, wherein the first beam size is determined based on a maximum random access distance calculated using random access preamble information.

18. The method of claim 14,

wherein the first information set includes a minimum elevation angle, and
wherein the minimum elevation angle includes a predefined value.

19. The method of claim 14,

wherein the second information set includes a maximum elevation angle, and
wherein the maximum elevation angle is included in an SIB including assistance information for NTN connection.

20. A terminal in a wireless communication system, the terminal comprising:

a transceiver; and
at least one processor connected to the transceiver,
wherein the at least one processor is configured to:

receive first information about an elevation angle for supporting the satellite communication and second information about a center of a beam;
determine coverage of a beam based on the first information and the second information;
determine a distance between the terminal and the center of the beam based on the second information; and
select a serving beam for the terminal based on the coverage of the beam and the distance.

FIG. 1

SATELLITE

LINK BETWEEN
SATELLITES

120-2

110

SERVICE
LINK

FEEDER
LINK

FEEDER
LINK

TERMINAL

130

BEAM
COVERAGE

GATEWAY

DATA
NETWORK

FIG. 2

FIG. 3

320

```
┌─────────────────┐
│ COMMUNICATION   │
│     UNIT        │
└─────────────────┘
         ↕
```

310

```
┌─────────────────┐
│   PROCESSOR     │
└─────────────────┘
         ↕
```

330

```
┌─────────────────┐
│     MEMORY      │
└─────────────────┘
```

FIG. 4A

420

MOVEMENT

BEAM COVERAGE

FIG. 4B

420

MOVEMENT

BEAM COVERAGE       BEAM COVERAGE

FIG. 5

FIG. 6

GNSS satellite

GNSS satellite

GPS

GPS

GPS

GNSS satellite

620

LEO satellite

Calculate Doppler shift
between LEO satellite
and beam center

Residual
Doppler shift

Beam center

Calculate residual
Doppler shift

610

Residual
Doppler shift

FIG. 7A

FIG. 7B

FIG. 7C

FIG. 7D

FIG. 8

FIG. 9

Calculate Doppler shift
between LEO satellite
and beam center

Beam edge $_v$.
(904)

RDS

Beam center
(902)

Beam edge $_h$.
(906)

FIG. 10

FIG. 11

FIG. 12

FIG. 13

FIG. 14

FIG. 15

FIG. 16

FIG. 17

FIG. 18

```
                    ┌─────────────┐
                    │    START    │
                    └──────┬──────┘
                           │
                           ▼
        ┌──────────────────────────────────┐
        │  RECEIVE SYSTEM INFORMATION       │──S1801
        │        OF SATELLITE               │
        └──────────────────┬───────────────┘
                           │        S1803
                           ▼
        ┌──────────────────────────────────┐
        │      DETERMINE BEAM SIZE          │
        └──────────────────┬───────────────┘
                           │        S1805
                           ▼
        ┌──────────────────────────────────┐
        │      DETERMINE DISTANCE           │
        │       FROM BEAM CENTER            │
        └──────────────────┬───────────────┘
                           │
                           ▼
                    ◇─────────────◇   S1807
                   ╱   LOCATED      ╲           NO
                  ◇  WITHIN EFFECTIVE ◇─────────────┐
                   ╲   COVERAGE?     ╱              │
                    ◇─────────────◇                │
                           │ YES                    │
                           │        S1809           │
                           ▼                        │
        ┌──────────────────────────────────┐        │
        │         SELECT BEAM               │        │
        └──────────────────┬───────────────┘        │
                           │                         │
                           ▼                         │
                    ┌─────────────┐                 │
                    │     END     │                 │
                    └─────────────┘                 │
```

FIG. 19

```
        ┌─────────────┐
        │    START    │
        └──────┬──────┘
               │            S1901
               ▼
        ┌─────────────────────────┐
        │      RECEIVE MOB        │
        └──────────┬──────────────┘
                   │        S1903
                   ▼
        ┌─────────────────────────┐
        │ TRANSMIT REQUEST FOR SIB│
        └──────────┬──────────────┘
                   │        S1905
                   ▼
        ┌─────────────────────────┐
        │      RECEIVE SIB        │
        └──────────┬──────────────┘
                   │
                   ▼
        ┌─────────────┐
        │     END     │
        └─────────────┘
```

FIG. 20

```
                    ( START )
                        |
                        |              S2001
                        v
        +-----------------------------------+
        |  DETECT SYNCHRONIZATION SIGNAL    |
        +-----------------------------------+
                        |
                        |              S2003
                        v
        +-----------------------------------+
        |       RECEIVE AND DECODE MIB      |
        +-----------------------------------+
                        |
                        |              S2005
                        v
        +-----------------------------------+
        |  CHECK SCS INFORMATION BASED ON FR|
        +-----------------------------------+
                        |
                        v
                     ( END )
```

FIG. 21

```
                    ┌─────────────┐
                    │    START    │
                    └──────┬──────┘
                           │            S2101
                           ▼
          ┌────────────────────────────────────┐
          │        TRANSMIT REQUEST FOR         │
          │      SIB RELATED TO SATELLITE       │
          └────────────────┬───────────────────┘
                           │            S2103
                           ▼
          ┌────────────────────────────────────┐
          │     RECEIVE SIB RELATED SATELLITE   │
          └────────────────┬───────────────────┘
                           │            S2105
                           ▼
          ┌────────────────────────────────────┐
          │     CHECK CENTER LOCATION OF BEAM   │
          └────────────────┬───────────────────┘
                           │
                           ▼
                    ┌─────────────┐
                    │     END     │
                    └─────────────┘
```

FIG. 22A

FIG. 22B

FIG. 22C

FIG. 23A

FIG. 23B

FIG. 24A

FIG. 24B

FIG. 25

Downlink frame ~2520

Uplink frame ~2510

$(N_{TA}+N_{TA,offset})T_c$

FIG. 26

$d_{max}(\theta_{min})$

$\Delta D = d_{max}(\theta_{min}) - d_{min}(\theta_{max})$

$d_{min}(\theta_{max})$

$h_{sat}$

Beam radius a   Beam radius a   $d_{SSP}$

2610

FIG. 27A

< Beam upper bound in FR1 & $\Theta_{min}= 10°$>

FIG. 27B

< Beam upper bound in FR1 & $\Theta_{min}= 25°$>

FIG. 28A

< Beam upper bound in FR2 & $\Theta_{min} = 10°$ >

FIG. 28B

< Beam upper bound in FR2 & $\Theta_{min}= 25°$>

FIG. 29

FIG. 30A

FIG. 30B

FIG. 30C

FIG. 30D

FIG. 31

```
                    ┌─────────────┐
                    │    START    │
                    └──────┬──────┘
                           │ ◄──────────────────────────┐
          ┌────────────────▼──────────────────┐         │
          │ RECEIVE SYSTEM INFORMATION OF SATELLITE ├──S3101   │
          └────────────────┬──────────────────┘         │
                           │         S3103               │
          ┌────────────────▼──────────────────┐         │
          │      DETERMINE FIRST BEAM SIZE     │         │
          │    BASED ON FIRST INFORMATION SET  │         │
          └────────────────┬──────────────────┘         │
                           │         S3105               │
          ┌────────────────▼──────────────────┐         │
          │     DETERMINE SECOND BEAM SIZE     │         │
          │   BASED ON SECOND INFORMATION SET  │         │
          └────────────────┬──────────────────┘         │
                           │         S3107               │
          ┌────────────────▼──────────────────┐         │
          │  DETERMINE FINAL BEAM SIZE BASED ON│         │
          │  FIRST BEAM SIZE AND SECOND BEAM SIZE        │
          └────────────────┬──────────────────┘         │
                           │         S3109               │
          ┌────────────────▼──────────────────┐         │
          │   DETERMINE DISTANCE FROM BEAM CENTER        │
          └────────────────┬──────────────────┘         │
                           │                             │
                           │        S3111                │
                     ╱─────▼─────╲           NO          │
                    ╱ LOCATED WITHIN╲────────────────────┘
                    ╲EFFECTIVE COVERAGE╱
                     ╲─────┬─────╱
                       YES │        S3113
          ┌────────────────▼──────────────────┐
          │            SELECT BEAM             │
          └────────────────┬──────────────────┘
                           │
                    ┌──────▼──────┐
                    │     END     │
                    └─────────────┘
```

FIG. 32

FIG. 33

START

TRANSMIT REQUEST FOR
SIB RELATED TO SATELLITE — S3301

RECEIVE SIB RELATED TO SATELLITE — S3303

CHECK MAXIMUM ELEVATION ANGLE — S3305

END

# EP 4 626 055 A1

## INTERNATIONAL SEARCH REPORT

International application No.

**PCT/KR2023/014557**

| A. | CLASSIFICATION OF SUBJECT MATTER |
|---|---|

**H04W 16/28**(2009.01)i; **H04W 48/10**(2009.01)i; **H04W 72/04**(2009.01)i; **H04W 74/08**(2009.01)i; **H04B 7/185**(2006.01)i; **H04L 27/26**(2006.01)i; **H04W 84/06**(2009.01)i

According to International Patent Classification (IPC) or to both national classification and IPC

| B. | FIELDS SEARCHED |
|---|---|

Minimum documentation searched (classification system followed by classification symbols)

H04W 16/28(2009.01); H04B 7/0408(2017.01); H04B 7/06(2006.01); H04B 7/15(2006.01); H04B 7/26(2006.01); H04W 24/08(2009.01); H04W 4/021(2018.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: LEO satellite networks, NR-based NTN, Beam size, Doppler shift, OFDM numerology

| C. | DOCUMENTS CONSIDERED TO BE RELEVANT |
|---|---|

| Category* | Citation of document, with indication, where appropriate, of the relevant passages | Relevant to claim No. |
|---|---|---|
| X | HAN, Sangmin et al. Beam Size Design for LEO Satellite Networks with Doppler Shift Characteristics. GW5. IWSICA, ICTC 2022. 20 October 2022. [Retrieved on 02 January 2024]. Retrieved from <URL: https://sites.google.com/view/theshinlab/. Department of Electrical and Computer Engineering, Ajou University, Korea>. See pages 4-18. This document is a document 'declaring exceptions to lack of novelty' in an earlier application that serves as a basis for claiming priority of the present international application. | 1-20 |
| X | HAN, Sangmin et al. Adaptive Beam Size Design for LEO Satellite Networks with Doppler Shift Compensation. 2022 IEEE VTS Asia Pacific Wireless Communications Symposium (APWCS). 26 August 2022. [Retrieved on 02 January 2024]. Retrieved from <URL: https://ieeexplore.ieee.org/document/9906490>. This document is a document 'declaring exceptions to lack of novelty' in an earlier application that serves as a basis for claiming priority of the present international application. See entire document. | 1-20 |

☑ Further documents are listed in the continuation of Box C.  ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **11 January 2024** | **11 January 2024** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
|---|
| **PCT/KR2023/014557** |

### C.　DOCUMENTS CONSIDERED TO BE RELEVANT

| Category* | Citation of document, with indication, where appropriate, of the relevant passages | Relevant to claim No. |
|---|---|---|
| A | CN 114885287 A (CHINA TELECOM CORPORATION LIMITED) 09 August 2022 (2022-08-09)<br>　　See paragraphs [0016] and [0157]-[0160]; and claim 1. | 1-20 |
| A | JP 09-116479 A (MOTOROLA INC.) 02 May 1997 (1997-05-02)<br>　　See paragraph [0014]. | 1-20 |
| A | KR 10-2018-0096242 A (SAMSUNG ELECTRONICS CO., LTD.) 29 August 2018 (2018-08-29)<br>　　See claim 1. | 1-20 |
| PX | 한상민 등. 저궤도 위성 통신망 설계를 위한 도플러 효과에 강인한 빔 크기 분석 및 설정. 한국통신학회 논문지. VOL. 47, NO. 12, PP. 2033 ~ 2046 (December 2022), 22 December 2022 (HAN, Sangmin et al. A Novel Beam Design and Performance Analysis of LEO Satellite Networks Robust to Doppler Effects. The Journal of Korean Institute of Communication and Information Sciences). [Retrieved on 02 January 2024]. Retrieved from <URL: https://www.dbpia.co.kr/pdf/pdfView.do?nodeId=NODE11175879>.<br>　　See entire document.<br>　　This document is a document 'declaring exceptions to lack of novelty' in an earlier application that serves as a basis for claiming priority of the present international application. | 1-20 |

**INTERNATIONAL SEARCH REPORT**
Information on patent family members

International application No.

**PCT/KR2023/014557**

| Patent document cited in search report | | | Publication date (day/month/year) | Patent family member(s) | | | Publication date (day/month/year) |
|---|---|---|---|---|---|---|---|
| CN | 114885287 | A | 09 August 2022 | None | | | |
| JP | 09-116479 | A | 02 May 1997 | CN | 100152824 | A | 25 June 1997 |
| | | | | US | 5644572 | A | 01 July 1997 |
| KR | 10-2018-0096242 | A | 29 August 2018 | CN | 110291730 | A | 27 September 2019 |
| | | | | CN | 110291730 | B | 17 February 2023 |
| | | | | EP | 3570464 | A1 | 20 November 2019 |
| | | | | EP | 3570464 | A4 | 08 January 2020 |
| | | | | EP | 3570464 | B1 | 24 August 2022 |
| | | | | KR | 10-2509019 | B1 | 13 March 2023 |
| | | | | US | 11031984 | B2 | 08 June 2021 |
| | | | | US | 2020-0007209 | A1 | 02 January 2020 |
| | | | | WO | 2018-155844 | A1 | 30 August 2018 |

Form PCT/ISA/210 (patent family annex) (July 2022)